# EUROPÄISCHE PATENTANMELDUNG

(11) **EP 3 492 859 A1**
(43) Veröffentlichungstag der Anmeldung: **05.06.2019**
(21) Anmeldenummer: 17205111.2
(22) Anmeldetag: 04.12.2017
(51) Int. Cl.: G01B 5/00

(54) **VORRICHTUNG UND VERFAHREN ZUR GEOMETRISCHEN VERMESSUNG EINES OBJEKTS**

(71) Anmelder: TAYLOR HOBSON LIMITED, Leicester LE4 9JQ (GB)
(72) Erfinder: AM WEG, Christian, 64289 Darmstadt (DE); MAY, Thilo, 64283 Darmstadt (DE)
(74) Vertreter: Weilnau, Carsten

(57) **Zusammenfassung**

Die vorliegende Erfindung betrifft eine Vorrichtung und ein Verfahren zur geometrischen Vermessung eines Objekts (14) sowie eine Objektträgereinrichtung (12) für eine solche Vorrichtung. Die Objektträgereinrichtung (12) weist einen Objekthalter (100) auf, an welchem das zu vermessende Objekt (14) befestigbar ist, wobei der Objekthalter (100) eine Oberseite (104) und eine Unterseite (106) aufweist. Die Objektträgereinrichtung (12) weist ferner einen Träger (140) auf, welcher eine erste Lagerstelle (141), eine zweite Lagerstelle (142) und eine dritte Lagerstelle (143) aufweist, die voneinander beabstandet am Träger (140) angeordnet sind. Am Objekthalter (100) ist eine Referenzstruktur vorgesehen, welche ein erstes Referenzobjekt (111), ein zweites Referenzobjekt (112) und ein drittes Referenzobjekt (113) aufweist, welche an den Ecken eines gedachten Dreiecks (108) am Objekthalter (100) angeordnet sind, wobei das erste Referenzobjekt (111) in einem ersten Abstand (D1) vom zweiten Referenzobjekt (112) angeordnet ist, wobei das zweite Referenzobjekt (112) in einem zweiten Abstand (D2) vom dritten Referenzobjekt (113) angeordnet ist und wobei das dritte Referenzobjekt (113) in einem dritten Abstand (D3) vom ersten Referenzobjekt (111) angeordnet ist und wobei sich der zweite Abstand (D2) von zumindest einem von erstem Abstand (D1) und drittem Abstand (D3) unterscheidet.

## Beschreibung

### Technisches Gebiet

Die vorliegende Erfindung betrifft eine Vorrichtung zur geometrischen Vermessung eines Objekts, insbesondere zur berührungslosen Oberflächenabtastung von optischen Komponenten, wie zum Beispiel Linsen. Die Erfindung betrifft zudem ein Verfahren zur Vermessung solcher Objekte sowie ein entsprechendes Computerprogramm. Weiterhin betrifft die Erfindung eine Objektträgereinrichtung für eine Vorrichtung zur geometrischen Vermessung eines Objekts.

### Hintergrund

Zur Qualitätssicherung als auch zur Überwachung von industriellen Herstellungsprozessen, insbesondere im Bereich der Feinwerktechnik, Optik sowie in der Fertigungstechnik mechanischer und elektronischer Mikrostrukturen, besteht ein wachsender Bedarf hinsichtlich einer hochauflösender und präzisen Vermessungen von Werkstücken oder allgemein von Objekten.

So ist aus der DE 10 2011 011 065 B4 eine Vorrichtung zur Vermessung zumindest eines Oberflächenabschnitts eines auf einem Träger gelagerten Objekts bekannt. Die Vorrichtung weist ein gegenüber dem Träger fixierbares Referenzobjekt und einen in zumindest einer ersten Richtung gegenüber dem Referenzobjekt beweglichen Halter auf. An dem Halter sind ein Referenzkörper sowie ein Abstandssensor angeordnet, die relativ zueinander drehbar gelagert sind. Der Abstandssensor ist dabei dazu ausgebildet, einen ersten Abstand zu einem ersten Punkt des Oberflächenabschnitts des Objekts und einen zweiten Abstand zu einem hiermit korrespondierenden zweiten Punkt des Referenzkörpers zu bestimmen. Mit einer derartigen Vorrichtung kann die Oberfläche eines Objekts hochpräzise und berührungslos optisch abgetastet bzw. abgescannt werden.

Ferner ist aus der DE 10 2014 007 203 A1 ein Objekthalter bekannt, an welchem ein zu scannendes Objekt fixierbar ist. Der Objekthalter weist eine Oberseite und eine Unterseite auf und er ist wahlweise in einer ersten Orientierung und einer zweiten Orientierung an einer Trägereinrichtung anordenbar. An der Oberseite ist eine obere Referenzstruktur und an der Unterseite ist eine untere Referenzstruktur vorgesehen. Gegenüberliegende Oberflächenabbilder einer abgescannten ersten Oberfläche und einer zweiten Oberfläche des Objekts sind anhand der oberen und unteren Referenzstrukturen einander zuordenbar.

Demgegenüber liegt der vorliegenden Erfindung nun die Aufgabe zugrunde, eine reproduzierbare und präzise Anordnung eines Objekthalters an einer Vorrichtung zur geometrischen Vermessung eines Objekts zu verbessern. Zudem soll die wechselseitige Zuordnung von gegenüberliegenden Oberflächen des abzuscannenden Objekts vereinfacht werden. Notwendige Messzeiten oder Taktraten zum Abscannen der Oberfläche des Objekts und zugehöriger Referenzstrukturen sollen verkürzt werden. Des Weiteren ist es Zielsetzung, eine verbesserte Objektträgereinrichtung bereitzustellen, die es bei gleichbleibender Geometrie einer Messvorrichtung ermöglicht, Objekte mit größerem Durchmesser geometrisch zu vermessen. Die Größe des geometrischen Messbereichs der Vorrichtung zur geometrischen Vermessung eines Objekts soll bei gleichbleibenden oder geringeren Außenabmessungen der Vorrichtung vergrößert werden. Weitere Zielsetzung sind ein dementsprechend verbessertes Messverfahren und ein dementsprechend verbessertes Computerprogramm.

### Erfindung und vorteilhafte Ausgestaltungen

Diese Aufgabe wird mit einer Objektträgereinrichtung gemäß Patentanspruch 1, einer Vorrichtung zur geometrischen Vermessung eines Objekts nach Patentanspruch 13, einem Verfahren zur geometrischen Vermessung eines Objekts nach Anspruch 14 sowie mit einem Computerprogramm gemäß Patentanspruch 15 gelöst. Weitere Ausgestaltungen sind dabei Gegenstand abhängiger Patentansprüche.

Insoweit ist eine Objektträgereinrichtung für eine Vorrichtung zur geometrischen Vermessung eines Objekts vorgesehen. Die Objektträgereinrichtung weist einen Objekthalter auf, an welchem das zu vermessende Objekt, typischerweise ein optisches Element, wie zum Beispiel eine Linse befestigbar ist. Der Objekthalter weist eine Oberseite und eine Unterseite auf. Die Objektträgereinrichtung weist ferner einen Träger auf, welcher eine erste Lagerstelle, eine zweite Lagerstelle und eine dritte Lagerstelle aufweist. Die Lagerstellen sind voneinander beabstandet am Träger angeordnet. Ferner ist an dem Objekthalter eine Referenzstruktur vorgesehen.Die Referenzstruktur weist ein erstes Referenzobjekt, ein zweites Referenzobjekt und ein drittes Referenzobjekt auf. Die Referenzobjekte sind dabei an den Ecken eines gedachten Dreiecks am Objekthalter angeordnet.

Das erste Referenzobjekt ist in einem ersten Abstand vom zweiten Referenzobjekt angeordnet. Das zweite Referenzobjekt ist in einem zweiten Abstand vom dritten Referenzobjekt angeordnet und das dritte Referenzobjekt ist in einem dritten Abstand vom ersten Referenzobjekt angeordnet. Der zweite Abstand unterscheidet sich dabei vom ersten Abstand oder vom dritten Abstand. Der zweite Abstand kann größer sein als der erste Abstand. Der zweite Abstand kann kleiner sein als der erste Abstand. Der erste und der dritte Abstand können identisch oder im Wesentlichen identisch sein. In einer alternativen Ausgestaltung können der erste Abstand und der dritte Abstand unterschiedlich sein. Demgemäß kann vorgesehen sein, dass die Referenzobjekte an den Ecken eines gedachten gleichschenkligen aber nicht gleichseitigen Dreiecks angeordnet sind. Ferner ist denkbar, dass das gedachte Dreieck drei unterschiedlich lange Seiten aufweist.

Mittels dieser Referenzstruktur ist es möglich, den Objekthalter in zumindest zwei unterschiedlichen Ausrichtungen, beispielsweise in einer ersten und in einer zweiten Ausrichtung am Träger anzuordnen. Die Lage, Position und geometrische Ausgestaltung von erster, zweiter und dritter Lagerstelle des Trägers korrespondiert hierbei mit den jeweiligen Positionen und geometrischen Ausgestaltungen von erstem, zweitem und drittem Referenzobjekt der Referenzstruktur des Objekthalters. Aufgrund der zum Teil unterschiedlichen Abstände zwischen den Referenzobjekten kann allein durch Betrachtung bzw. durch ein Abscannen der Referenzstruktur, beispielsweise mittels der Vorrichtung zur geometrischen Vermessung des Objekts, sofort und unmittelbar bestimmt werden, ob sich der Objekthalter und seine Referenzstruktur in der ersten oder in der zweiten Ausrichtung befinden. Die voneinander abweichenden Abstände zwischen den Referenzobjekten ermöglichen eine eindeutige Bestimmung der Lage und Ausrichtung des Objekthalters am Träger.

Die erste und die zweite Ausrichtung des Objekthalters sind durch eine Drehung des Objekthalters um 180° ineinander überführbar. Insoweit kann beispielsweise eine bezogen auf eine Vertikale nach oben weisende Oberseite des Objekts von der Vorrichtung abgescannt werden, wenn sich der Objekthalter in der ersten Ausrichtung befindet. Befindet sich der Objekthalter in der zweiten Ausrichtung, kann eine bezogen auf die Vertikale nach oben weisende Unterseite des Objekts abgescannt werden. Von Vorteil ist die Referenzstruktur und jedes ihrer drei Referenzobjekte zumindest bereichsweise in jeder der beiden denkbaren Ausrichtungen von außen, von unten und/oder von oben zugänglich, sodass die Lage der Referenzobjekte sowohl in der ersten als auch in der zweiten Ausrichtung des Objekthalters am Träger im Zuge der Vermessung des Objekts erfasst und mit der Objektoberfläche eindeutig in Bezug gesetzt werden können.

So ist beispielsweise in einer ersten Ausrichtung des Objekthalters sowohl eine erste Oberfläche des Objekts als auch zumindest ein erster Oberflächenabschnitt von erstem, zweitem und dritten Referenzobjekt abscannbar oder bestimmbar. In der zweiten Ausrichtung kann die zweite Oberfläche, typischerweise die Unterseite des Objekts, und zumindest ein weiterer Oberflächenabschnitt des ersten Referenzobjekts, des zweiten Referenzobjekts und des dritten Referenzobjekts erfasst bzw. abgescannt werden. Das Abscannen der ersten Oberfläche des Objekts führt zu einem ersten Oberflächenabbild. Dieses kann mit der Lage, Geometrie oder Position der drei Referenzobjekte in Bezug gesetzt werden. Gleichermaßen kann im Zuge des Abscannens der zweiten Oberfläche ein zweites Oberflächenabbild des Objekts, beispielsweise durch Abscannen gebildet werden. Das zweite Oberflächenabbild kann gleichermaßen zu derselben Referenzstruktur in Bezug gesetzt werden.

Da die Referenzstruktur, mithin das erste Referenzobjekt, das zweite Referenzobjekt und das dritte Referenzobjekt sowohl im ersten als auch im zweiten Oberflächenabbild des Objekts enthalten oder diesem zuordenbar sind, können auf Basis der Referenzobjekte die Oberflächenabbilder zueinander in Bezug gesetzt werden. Die von gegenüberliegenden Seiten des Objekthalters aufgenommenen Oberflächenabbilder können somit über drei einzelne Referenzobjekte präzise und eindeutig in Bezug zueinander gesetzt werden. Die zum Teil unterschiedlichen und in der Vorrichtung zur geometrischen Vermessung als bekannt hinterlegten Abstände zwischen den Referenzobjekten ermöglichen eine computergestützte, vollautomatische eindeutige Identifizierung der einzelnen Referenzobjekte, sodass jedes der Referenzobjekte sowohl im ersten Oberflächenabbild als auch im zweiten Oberflächenabbild eindeutig identifizierbar ist.

Nach einer Weiterbildung der Objektträgereinrichtung ist der Objekthalter mittels der Referenzobjekte in einer ersten und in einer zweiten Ausrichtung an den Lagerstellen des Trägers lagestabil positionierbar oder fixierbar. Der Objekthalter ist dabei ausgehend von der ersten Ausrichtung durch eine Drehung um 180° bezüglich einer durch das erste Referenzobjekt verlaufenden gedachten Drehachse in die zweite Ausrichtung überführbar. Die Lagerung oder mechanische Halterung des Objekthalters über die Referenzobjekte hat ferner den Vorteil, dass die Referenzobjekte eine Doppelfunktion erfüllen. Sie stellen Referenzpunkte für das Abscannen von Oberseite und Unterseite des Objekthalters dar. Zugleich kann durch die mechanische Lagerung des Objekthalters, welche allein und ausschließlich über die drei Referenzobjekte erfolgen kann, eine präzise und reproduzierbare Anordnung des Objekthalters am Träger bereitgestellt werden.

So ist beispielsweise denkbar, über die Referenzobjekte und über die hiermit korrespondierend oder komplementär ausgestalteten bzw. angeordneten Lagerstellen des Trägers eine stets gleichbleibende, definierte, in hohem Maße reproduzierbare Positionierung des Objekthalters am Träger zu ermöglichen. Bei solchen Ausführungsformen, bei welchen der Objekthalter ausschließlich über das erste, das zweite und das dritte Referenzobjekt am Träger gelagert bzw. angeordnet ist, ergibt sich automatisch eine lagestabile, d.h. verkippungsfreie Positionierung des Objekthalters am Träger. Dadurch dass der Träger mit ersten, zweiten und dritten Lagerstellen versehen ist, die komplementär oder korrespondierend zur Lage und Geometrie der Referenzobjekte ausgestaltet sind, kann eine definierte, lagestabile Position oder auch gar eine Fixierung des Objekthalters am Träger erreicht werden.

Insbesondere können die Lagerstellen Aufnahmen und/oder Vertiefungen für die Referenzobjekte bereitstellen, sodass bei Ablage der Referenzobjekte an den zugehörigen Lagerstellen eine mechanische Kopplung von Träger und Objekthalter erreicht wird. Die mechanische Kopplung von Träger und Objekthalter, welche ausschließlich über die Referenzobjekte und die zugehörigen Lagerstellen erfolgt kann sogar drehmomentübertragend sein, sodass ein rotierender Träger ein entsprechendes Drehmoment auf den Objekthalter ausüben kann, sodass sich der Träger und der Objekthalter gemeinsam drehen. Mithin können die Referenzobjekte und die Lagerstellen zur Bildung einer formschlüssigen, zumindest aber schlupffreien drehmomentübertragenden Verbindung von Träger und Objekthalter ausgestaltet sein.

Entsprechend der wechselseitigen Anordnung von erstem, zweitem und drittem Referenzobjekt können auch die erste, die zweite und die dritte Lagerstelle unterschiedliche Abstände voneinander aufweisen. So ist es prinzipiell denkbar, dass die erste Lagerstelle in einem ersten Lagerabstand von der zweiten Lagerstelle angeordnet ist, dass die zweite Lagerstelle in einem zweiten Lagerabstand von der dritten Lagerstelle angeordnet ist und dass die dritte Lagerstelle in einem dritten Lagerabstand von der ersten Lagerstelle angeordnet ist. Es ist dabei insbesondere denkbar, dass sich der erste Lagerabstand vom zweiten Lagerabstand unterscheidet. Zweiter und dritter Lagerabstand können auch identisch sein. Auch kann sich der zweite Lagerabstand vom dritten Lagerabstand unterscheiden. Es kann ferner vorgesehen sein, dass zumindest zwei von erster, zweiter und dritter Lagerstelle eine eindeutige Aufnahme für jeweils ein Referenzobjekt bilden und dass eine dritte Lagerstelle geometrisch derart ausgestaltet ist, dass ein Referenzobjekt in der ersten Ausrichtung des Objekthalters eine andere Position als in der zweiten Ausrichtung des Objekthalters einnimmt.

Die Positionen, die Ausrichtungen und/oder die Geometrien von erster, zweiter und dritter Lagerstelle können eine Art mechanische Codierung bilden, die lediglich eine einzige mögliche Anordnung des Objekthalters in der ersten Ausrichtung und lediglich eine einzige mögliche Anordnung des Objekthalters in der zweiten Ausrichtung am Träger ermöglicht. Auf diese Art und Weise kann sichergestellt werden, dass der abnehmbar am Träger anordenbare Objekthalter lediglich in einer einzigen und somit eindeutigen Lage am Träger lagestabil positionierbar oder fixierbar ist.

Würden die Lagerstellen und die Referenzobjekte an den Ecken eines gedachten gleichseitigen Dreiecks liegen, so wären für jedwede Ausrichtung des Objekthalters jeweils drei unterschiedliche Konstellationen zur Halterung des Objekthalters am Träger denkbar. Das erste Referenzobjekt könnte beliebig an einer von erster, zweiter oder dritter Lagerstelle angeordnet werden. Entsprechendes gilt für die übrigen Referenzobjekte.

Dadurch dass sich der erste Abstand der Referenzobjekte vom zweiten und/oder vom dritten Abstand unterscheidet, kann sichergestellt werden, dass der Objekthalter in seiner ersten Ausrichtung, bei welcher seine Oberseite nach oben zeigt und auch in der zweiten Ausrichtung, in welcher seine Unterseite nach oben zeigt, in nur jeweils einer einzigen Lage an den Lagerstellen der Objektträgereinrichtung lagestabil positionierbar oder fixierbar ist.

Nach einer weiteren Ausgestaltung ist vorgesehen, dass in der ersten Ausrichtung des Objekthalters das erste Referenzobjekt an der ersten Lagerstelle anordenbar ist, das zweite Referenzobjekt an der zweiten Lagerstelle anordenbar ist und das dritte Referenzobjekt an der dritten Lagerstelle anordenbar ist. Es ist dabei insbesondere vorgesehen, dass in der ersten Ausrichtung das erste Referenzobjekt ausschließlich an der ersten Lagerstelle, das zweite Referenzobjekt ausschließlich an der zweiten Lagerstelle und das dritte Referenzobjekt ausschließlich an der dritten Lagerstelle lagestabil anordenbar oder positionierbar ist. Anderweitige Ausrichtungen oder Orientierungen des Objekthalters relativ zum Träger führen zu einer instabilen Lagerung.

In der ersten Ausrichtung ist insbesondere vorgesehen, dass die Oberseite des typischerweise planar ausgestalteten Objekthalters, bezogen auf eine Vertikale nach oben weist. Hierbei kann vorgesehen sein, dass der zweite Abstand und der dritte Abstand zwischen den Referenzobjekten identisch oder unterschiedlich sind. Der erste Abstand zwischen den Referenzobjekten unterscheidet sich vom zweiten Abstand oder vom dritten Abstand. Die insoweit herbeigeführte Asymmetrie der Anordnung der Referenzobjekte ermöglicht in der ersten Ausrichtung des Objekthalters lediglich eine einzige und eindeutige lagestabile Positionierung des Objekthalters am Träger.

Nach einer weiteren Ausgestaltung ist vorgesehen, dass in der zweiten Ausrichtung des Objekthalters das erste Referenzobjekt an der ersten Lagerstelle anordenbar ist, das zweite Referenzobjekt an der dritten Lagerstelle anordenbar ist und dass das dritte Referenzobjekt an der zweiten Lagerstelle anordenbar ist. In der zweiten Ausrichtung des Objekthalters ist typischerweise vorgesehen, dass die Unterseite des Objekthalters bezogen auf die Vertikale nach oben weist. Im Gegensatz zur ersten Ausrichtung ist der Objekthalter um 180° gedreht. Die Drehachse verläuft hierbei durch die Ebene des Objekthalters, typischerweise durch das erste Referenzobjekt. Die Asymmetrie bzw. die voneinander abweichenden Abstände zwischen den Referenzobjekten, ggf. auch zwischen den Lagerstellen, bewirken in der zweiten Ausrichtung des Objekthalters ebenfalls nur eine einzige mögliche Anordnung des Objekthalters am Träger. Es ist insoweit vorgesehen, dass in der zweiten Ausrichtung des Objekthalters das erste Referenzobjekt ausschließlich an der ersten Lagerstelle anordenbar ist, das zweite Referenzobjekt ausschließlich an der dritten Lagerstelle anordenbar ist und das dritte Referenzobjekt ausschließlich an der zweiten Lagerstelle anordenbar ist.

Das erste Referenzobjekt verändert seine Position beim Überführen von der ersten in die zweite Ausrichtung nicht. Die zweiten und dritten Referenzobjekte vertauschen ihre Positionen im Zuge der Überführung von der ersten Ausrichtung in die zweite Ausrichtung. Hierbei ist es von besonderem Vorteil, wenn die Referenzobjekte an den Ecken eines gedachten gleichschenkligen, aber nicht gleichseitigen Dreiecks liegen. Es sind aber auch Ausführungsformen denkbar, bei welchen sämtliche Seiten des gedachten Dreiecks zueinander unterschiedliche Längen aufweisen. Die zweite und die dritte Lagerstelle können hierbei derart ausgestaltet sein, dass sie sich über einen Bereich erstrecken, welcher in etwa einer Längendifferenz zwischen den unterschiedlichen Längen von erstem Abstand, zweitem Abstand oder drittem Abstand entspricht.

Nach einer weiteren Ausgestaltung ist ferner vorgesehen, dass zumindest eines von erstem, zweitem und drittem Referenzobjekt von einem Außenrand des Objekthalters hervorsteht. So können sämtliche Referenzobjekte vom Außenrand des Objekthalters hervorstehen. Der Objekthalter kann eine planare oder ebene Geometrie aufweisen. Die Referenzobjekte können hierbei in der Ebene des Objekthalters liegen und in dieser Ebene liegend vom Außenrand des Objekthalters hervorstehen. Dies verleiht dem Objekthalter ein besonders kompaktes Design. Ferner sind die vom Objekthalter nach außen hervorstehenden Referenzobjekte für ein Erfassen der Referenzobjekte sowohl in der ersten als auch in der zweiten Ausrichtung von Vorteil. Die Referenzobjekte werden in jedwede Ausrichtung des Objekthalters vom Objekthalter nicht verdeckt, sondern sie liegen abschattungsfrei außerhalb des Außenrandes des Objekthalters.

Die vom Außenrand des Objekthalters hervorstehenden Referenzobjekte eignen sich ferner besonders gut für eine intuitive Anordnung des Objekthalters am Träger. Die Lager- oder Befestigungspunkte des Objekthalters sind für den Endanwender sofort und unmittelbar aufgrund ihrer vom Außenrand hervorspringenden Kontur erkennbar. Zudem können zumindest eine Lagerstelle und ein Referenzobjekt zusätzlich mit einer Kennzeichnung versehen sein, mittels derer für den Endanwender unmittelbar ersichtlich beispielsweise das erste Referenzobjekt der ersten Lagerstelle zuordenbar ist.

Dies ermöglicht es, die Abstandsunterschiede zwischen dem ersten Abstand und einem von zweitem oder drittem Abstand vergleichsweise gering zu halten, sodass über den Außenrand des Objekthalters eine für die Lagerung des Objekthalters vorteilhafte annähernd äquidistante Anordnung der einzelnen Referenzobjekte ermöglicht werden kann. Streng genommen sind die Referenzobjekte jedoch nicht äquidistant am Außenrand des Objekthalters angeordnet sondern sie weisen die bereits beschriebenen, zumindest geringfügig unterschiedlichen Abstände auf, die eine einzige vorgegebene Anordnung des Objekthalters am Träger erzwingen.

Da die Lagerstellen korrespondierend zur Referenzstruktur des Außenrands des Objekthalters am Träger angeordnet sind kann bereits mittels einer einzigen Kennzeichnung einer einzigen Lagerstelle und eines einzigen Referenzobjekts die korrekte Anordnung des Objekthalters am Träger definiert werden. Eine aufgrund der Dreiecksanordnung mögliche Drehung des Objekthalters bezüglich einer senkrecht zur Ebene des Objekthalters verlaufenden Drehachse kann durch die unterschiedlichen Abstände der Referenzobjekte zwar nicht ausgeschlossen werden. In einer um jene Drehachse gedrehte Anordnung ist jedoch aufgrund der nicht zueinander passenden Anordnung von Referenzobjekten und Lagerstellen eine lagestabile Positionierung des Objekthalters am Träger ausgeschlossen.

Nach einer weiteren Ausgestaltung ist zumindest eines der Referenzobjekte über einen längserstreckten Schaftabschnitt am Außenrand des Objekthalters befestigt. Mittels des längserstreckten Schaftabschnitts kann eine vom Außenrand des Objekthalters beabstandete Anordnung der Referenzobjekte erfolgen. Mithin können die dem Außenrand zugewandten Oberflächenabschnitte der Referenzobjekte zur Lage- udn/oder Positionserfassung der Referenzobjekte dienen.

Nach einer weiteren Ausgestaltung weist der Schaftabschnitt einen Schaftdurchmesser oder einen Schaftquerschnitt auf, welcher kleiner ist als ein entsprechender Durchmesser oder Querschnitt des Referenzobjekts. Der Schaftabschnitt kann einen Schaftdurchmesser aufweisen, der kleiner ist als der Durchmesser des Referenzobjekts. Der Schaftdurchmesser kann weniger als 90 %, weniger als 70 %, weniger als 60 % oder auch weniger als 50 % des Durchmessers des Referenzobjekts betragen. Der Schaftabschnitt als auch das Referenzobjekt können eine kreisrunde oder ovale Außenkontur aufweisen. Ferner ist denkbar, dass der Schaftabschnitt und/oder das Referenzobjekt eine eckige Außenkontur aufweisen. In diesem Fall kann der Schaft eine Querschnittsfläche aufweisen die kleiner ist als die Querschnittsfläche des zugehörigen Referenzobjekts. Die Querschnittsfläche des Schaftquerschnitts kann weniger als 90 %, weniger als 70 %, weniger als 60 % oder auch weniger als 50 % der Querschnittsfläche des Referenzobjekts betragen.

Der Schaftabschnitt kann ferner eine Taillierung aufweisen. Ferner ist nach einer weiteren Ausgestaltung denkbar, dass der Schaftabschnitt und das Referenzobjekt einstückig ausgestaltet sind. Ferner ist denkbar, dass der Schaftabschnitt und das Referenzobjekt jeweils einteilig ausgestaltet und miteinander verbunden sind.

Es ist ferner denkbar, dass zumindest eines oder mehrere Referenzobjekte auswechselbar am Objekthalter angeordnet sind. Ferner ist denkbar, dass eines oder mehrere Referenzobjekte verstellbar bzw. hinsichtlich ihrer Position und Ausrichtung justierbar am Objekthalter angeordnet sind.

Nach einer weiteren Ausgestaltung weist zumindest eines von erstem, zweitem und drittem Referenzobjekt eine Referenzkugel mit einer sphärischen Außenoberfläche auf. Mithin können das erste, das zweite und das dritte Referenzobjekt jeweils eine Referenzkugel mit einer sphärischen Außenoberfläche aufweisen. Das erste, das zweite und das dritte Referenzobjekt können eine weitreichend identische Kontur oder Formgebung aufweisen. Die genaue Geometrie und Außenkontur der Referenzobjekte kann in der Vorrichtung zur geometrischen Vermessung des Objekts im Zuge einer Kalibrierung präzise erfasst und hinterlegt sein. Beispielsweise kann durch ein Abscannen oder Erfassen eines oder mehrerer Oberflächenabschnitte der sphärischen Außenoberfläche von einem Referenzobjekt ein Rückschluss über die geometrische Mitte oder über das Zentrum des betreffenden Referenzobjekts gezogen werden.

Nach einer weiteren Ausgestaltung weist zumindest eine von erster, zweiter und dritter Lagerstelle eine in etwa V-förmige Nut zur Aufnahme eines entsprechenden Referenzobjekts auf. Eine V-förmige Nut weist eine sich nach unten hin verjüngende Aufnahme für jeweils ein Referenzobjekt auf. Die Nut ist derart bemessen, dass das zugehörige Referenzobjekt an genau zwei Punkten an gegenüberliegenden Schenkeln der Nut anliegt und auf diese Art und Weise unter Einwirkung der Schwerkraft lagestabil an der Nut fixierbar ist. Von Vorteil ist dabei vorgesehen, dass jede Lagerstelle eine in etwa V-förmige Nut zur Aufnahme jeweils eines Referenzobjekts aufweist.

Wenn die Referenzobjekte verteilt über den Außenumfang oder Außenrand des Objekthalters angeordnet sind, sind die zugehörigen Lagerstellen und die V-förmigen Nuten entsprechend der Außenkontur oder dem Außenrand des Objekthalters am Träger angeordnet. Mithin können die Lagerstellen ebenfalls an einem Außenrand des Trägers angeordnet sein. Bei einem kreisrunden oder rotationssymmetrisch ausgestalteten Träger kann insbesondere vorgesehen sein, dass die Lagerstellen in unterschiedlichen Ausrichtungen an dem Träger angeordnet sind. Jede V-förmige Nut hat eine Profil- oder Längsrichtung, entlang welcher die Nut eine gleichbleibende Querschnittsgeometrie aufweist. Die Nuten können dabei radial außen, etwa am Außenrand des Trägers derart angeordnet sein dass die Längsrichtung einer jeden Nut in etwa radial nach innen zum Zentrum des Trägers zeigt. Der Abstand der Lagerstellen und der hiervon jeweils gebildeten Nuten in Umfangsrichtung des Trägers entspricht den Abständen der Referenzobjekte in Umfangsrichtung in Bezug auf den Objekthalter.

Dadurch dass die Nuten eine selbstzentrierende Anordnung der kugelförmigen Referenzobjekte ermöglichen und dadurch dass die V-förmigen Nuten unterschiedlich zueinander ausgerichtet sind, ergibt sich eine selbstzentrierende Lagerung des Objekthalters, wenn dieser mit seinen drei, etwa in Form von Referenzkugeln ausgestalteten Objekten an den V-Nut-artig ausgestalteten Lagerstellen zur Anlage gelangt. Die Lagerstellen sind in einer gemeinsamen Ebene am Träger angeordnet. Die erste Lagerstelle, mithin die erste V-förmige Nut kann dabei mit ihrer Längsrichtung auf 0° ausgerichtet sein, die zweite Lagerstelle, mithin die zweite V-förmige Nut kann in etwa um 120° gedreht zur ersten Nut ausgerichtet sein und die dritte Lagerstelle, mithin die dritte V-förmige Nut kann um 240° zur ersten V-förmigen Nut gedreht sein. Jene Winkelangaben beziehen sich auf eine Ausgestaltung, bei welcher die ersten, zweiten und dritten Abstände der Referenzobjekte nur geringfügig unterschiedlich sind. Es versteht sich von selbst, dass bei einer von einem gleichseitigen Dreieck abweichenden Anordnung der Referenzobjekte und der zugehörigen Lagerstellen die Ausrichtungen bzw. Drehwinkel der V-förmigen Nuten entsprechend angepasst sind.

Nach einer weiteren Ausgestaltung ist die Nut der zumindest einen Lagerstelle von zwei gegenüberliegenden und schräg zur Vertikalen verlaufenden Schenkeln gebildet. Voneinander abgewandte Endabschnitte der Schenkel sind dabei horizontal abgeflacht. Die zur Bildung einer V-förmigen Nut an den Lagerstellen vorgesehenen gegenüberliegenden Schenkel können insbesondere an ihrem unteren Ende, an welchem sie den geringsten Abstand zueinander aufweisen, unter einem Winkel von 30° bis 60° gegenüber einer Horizontalen nach oben geneigt ausgerichtet sein. Nach oben hin kann die Steigung der Schenkel abnehmen. Zu ihren obenliegenden und voneinander weg weisenden freien Enden hin können die Schenkel eine stetig geringer werdende Steigung gegenüber einer Horizontalen aufweisen.

Die Steigung der Schenkel kann sich von unten nach oben stufenlos oder stufenweise verringern. An ihren obenliegenden und voneinander abgewandten Endabschnitten können die Schenkel ein abgeflachtes Plateau aufweisen. Die obenliegenden Enden der Schenkel der V-förmigen Nut weisen daher keine freistehende Spitze auf. Das abgeflachte Plateau ist für die Aufnahme der Referenzobjekte von Vorteil. Bei einem Auflegen der Referenzobjekte auf das abgeflachte Plateau oder an die abgeflacht verlaufenden Endabschnitte der Schenkel sind Beschädigungen der mitunter kratz- oder stoßempfindlichen Referenzobjekte nicht oder in einem weitaus geringeren Maße zu befürchten als dies bei nach oben hin spitz auslaufenden Schenkeln der Fall wäre.

Nach einer weiteren Ausgestaltung ist der Träger der Objektträgereinrichtung drehbar an einer Basis einer Vorrichtung zur geometrischen Vermessung des Objekts lagerbar. Der Träger kann eine Welle oder einen drehbaren Schaft aufweisen, an welche der eigentliche ring- oder tellerförmige Trägerkörper angeordnet ist. Die drehbare Lagerung des Trägers an der Basis der Messvorrichtung ermöglicht ein besonders zeitsparendes linienförmiges, etwa spiralartiges Abscannen der Oberflächen des Objekts sowie der Referenzobjekte.

Nach einer weiteren Ausgestaltung weist der Träger der Objektträgereinrichtung einen ring- oder tellerförmigen Trägerkörper mit einem Außenrand auf. An dem Außenrand sind ein erster Lagerkörper, ein zweiter Lagerkörper und ein dritter Lagerkörper angeordnet. Die Lagerkörper sind hierbei in einem vorgegebenen Abstand voneinander am Außenrand des Trägerkörpers angeordnet. Der erste Lagerkörper weist den ersten Lagerabschnitt, mithin die erste V-förmige Nut auf. Der zweite Lagerkörper weist den ersten Lagerabschnitt, mithin die zweite V-förmige Nut auf und der dritte Lagerkörper weist den dritten Lagerabschnitt, mithin die erste V-förmige Nut auf.

Die Anordnung der Trägerkörper am Außenrand des Trägers ermöglicht eine ungehinderte Zugänglichkeit der Lagerkörper und der hiervon gebildeten Lagerabschnitte. Die einzelnen Lagerkörper können beispielsweise lösbar bzw. auswechselbar am Trägerkörper angeordnet sein. Sie können ferner auch justierbar oder verstellbar, beispielsweise stufenlos verstellbar am Trägerkörper angeordnet sein. Dies ermöglicht die Verwendung unterschiedlich ausgestalteter Lagerkörper bzw. unterschiedlich ausgestalteter V-förmiger Nuten, um beispielsweise unterschiedlichen Referenzobjekte unterschiedlicher Objekthalter Rechnung zu tragen. Auf diese Art und Weise können beispielsweise auf Basis ein und desselben ring- oder tellerförmigen Trägerkörpers unterschiedlich konfigurierte Träger für unterschiedlich konfigurierte Objekthalter bereitgestellt werden, die über die jeweils individuelle und unterschiedliche Anordnung oder Ausgestaltung von Referenzobjekten und Lagerstellen quasi mechanisch codiert sind.

Somit kann ein bestimmter Objekthalter auf genau einen bestimmten Träger mechanisch codiert werden; und umgekehrt. Bei Verwendung mehrerer Objekthalter und mehrerer Träger für die Messvorrichtung kann aufgrund individueller Anordnung und Konfiguration von Referenzobjekten und Lagerkörper eine mechanische Codierung sowohl seitens des Trägers als auch seitens des Objekthalters bereitgestellt werden. Nur identisch mechanisch codierte Objekthalter und Träger können zu einer Objektträgereinrichtung derart zusammengefügt werden, dass der Objekthalter lagestabil am Träger positionierbar oder fixierbar ist. Andere Paarungen von nicht aufeinander abgestimmten Objekthaltern und Trägern führen hingegen zu einer instabilen Positionierung oder verhindern gar eine Positionierung des Objekthalters am Träger.

Nach einer weiteren Ausgestaltung stehen der erste, der zweite und der dritte Lagerkörper, bezogen auf die Geometrie des Trägerkörpers, vom Außenrand des Trägerkörpers hervor. Eine radial nach außen hervorstehende Anordnung der Lagerkörper ist für eine intuitive Handhabung der Objektträgereinrichtung von Vorteil. Für den Endanwender ist somit sofort und eindeutig ersichtlich, wo sich die von den Trägerkörpern gebildeten Lagerstellen für die Referenzobjekte des Objekthalters befinden. Des Weiteren kann durch die radial hervorstehende Anordnung der Lagerkörper am Trägerkörper eine weitreichende bzw. uneingeschränkte Zugänglichkeit der Lagerkörper bereitgestellt werden, sodass diese ggf. justiert oder ausgetauscht werden können.

Nach einer weiteren Ausgestaltung stehen der erste, der zweite und der dritte Lagerabschnitt, bezogen auf die Geometrie des Trägerkörpers, axial vom Außenrand hervor. Sie können insbesondere, bezogen auf eine Horizontale, nach oben vom Außenrand des Trägerkörpers hervorstehen. Eine derartige Ausgestaltung ermöglicht eine vertikal beabstandete Lagerung des Objekthalters zum Träger. Mithin kann durch die nach oben ragenden Lagerkörper und/ oder deren Lagerabschnitte erreicht werden, dass der Objekthalter weitreichend berührungsfrei und ausschließlich über die Referenzobjekte am Träger gelagert werden kann. Hierdurch kann sichergestellt werden, dass eine dem Träger zugewandte Oberfläche des zu vermessenden Objekts in einem ausreichenden Abstand zum Träger bzw. Trägerkörper zu liegen kommt. Etwaige Beschädigungen des zu vermessenden Objekts können auf diese Art und Weise bei einem Umdrehen des Objekthalters weitreichend vermieden werden.

Nach einer weiteren Ausgestaltung ist ferner eine Vorrichtung zur geometrischen Vermessung eines Objekts vorgesehen. Die Vorrichtung weist eine Basis und eine daran angeordnete zuvor beschriebene Objektträgereinrichtung für das zu vermessende Objekt auf. Die Vorrichtung weist ferner ein gegenüber der Basis fixierbares Referenzobjekt auf. Die Vorrichtung weist ferner zumindest eine Abstandsmesseinrichtung auf, mittels welcher ein Abstand zwischen dem Referenzobjekt und einer dem Referenzobjekt zugewandten Oberfläche des Objekts bestimmbar ist. Der Objekthalter ist mittels seiner Referenzstruktur, insbesondere mittels seines ersten, zweiten und dritten Referenzobjekts wahlweise in einer ersten Ausrichtung und in einer zweiten Ausrichtung an der Objektträgereinrichtung, mithin am Träger der Objektträgereinrichtung anordenbar.

Die Abstandsmesseinrichtung und der Objekthalter sind zum Abtasten bzw. Abscannen der Oberfläche des Objekts und der Referenzstruktur relativ zueinander beweglich. In der ersten Ausrichtung ist der Objekthalter mit seiner Oberseite der Abstandsmesseinrichtung zugewandt. In seiner zweiten Ausrichtung ist der Objekthalter mit seiner Unterseite der Abstandsmesseinrichtung zugewandt. In der ersten Ausrichtung ist insoweit eine erste Oberfläche des Objekts abscannbar. In der ersten Ausrichtung sind ferner einzelne Oberflächenabschnitte der Referenzstruktur, mithin einzelne Oberflächenabschnitte von erstem, zweitem und drittem Referenzobjekt abscannbar. Insoweit kann in der ersten Ausrichtung des Objekthalters ein Oberflächenabbild der ersten Oberfläche des Objekts taktil abgetastet oder berührungslos abgescannt werden.

Im ersten Oberflächenabbild können ferner ausgewählte, typischerweise vordefinierte Oberflächenabschnitte von erstem Referenzobjekt, zweitem Referenzobjekt und drittem Referenzobjekt abgebildet sein. Die abgescannte Oberfläche kann im ersten Oberflächenabbild zur Lage der ebenfalls abgescannten Referenzobjekte in einen festen Bezug gesetzt werden. Gleichermaßen kann ein entsprechendes Abscannen des Objekthalters, des darin gehaltenen Objekts und der drei Referenzobjekte erfolgen, wenn sich der Objekthalter in der zweiten Ausrichtung am Träger befindet. Auf diese Art und Weise kann die abgescannte zweite Oberfläche des Objekts mit den ebenfalls in dieser Ausrichtung abgescannten Oberflächenabschnitten der Referenzobjekte in einen festen Bezug gesetzt werden.

Die Beziehungen der in der ersten Ausrichtung und in der zweiten Ausrichtung im ersten und zweiten Oberflächenabbild aufgenommenen Oberflächenabschnitte der Referenzobjekte zueinander ist bekannt, bzw. sie ist durch Kalibrierung der Vorrichtung ermittelbar. Auf Basis der im ersten und im zweiten Oberflächenabbild jeweils vorhandenen oder aufgenommenen Referenzobjekte können die abgescannten gegenüberliegenden Oberflächen des zu vermessenden Objekts wechselseitig und präzise einander zugeordnet werden. Aus dieser Zuordnung sind diverse geometrische Größen sowie Charakteristika des Objekts, so z.B. die Dicke des Objekts, ein Dickenprofil, ein Keilfehler, eine Verkippung sowie eine Verdrehung der Oberflächen um deren optische Achse präzise bestimmbar. Die hier vorgesehene Vorrichtung ist insbesondere zum Vermessen von optischen Elementen, beispielsweise von optischen Linsen geeignet und vorgesehen. Sie dient insbesondere zur Vermessung von Linsen-Freiformflächen, so etwa von beidseitig asphärischen optischen Linsen.

Nach einer Weiterbildung weist die Vorrichtung eine Steuerung auf. Die Steuerung ist typischerweise mit dem Träger als auch mit der Abstandsmesseinrichtung datentechnisch gekoppelt. Mittels der Steuerung kann der jeweilige Scann-Vorgang zum Abscannen der jeweils obenliegenden Oberfläche des zu vermessenden Objekts und der von oben bzw. von außen oder von der Seite zugänglichen Seiten der Referenzobjekte gesteuert und kontrolliert werden. Die Steuerung ist insbesondere computerimplementiert ausgestaltet. Sie kann zum einen die Relativbewegung zwischen der Abstandsmesseinrichtung und dem zu vermessenden Objekt steuern. Sie kann ferner dazu ausgelegt sein, die mittels der Abstandsmesseinrichtung gewonnenen ersten und zweiten Oberflächenabbilder elektronisch zu verarbeiten und durch Identifikation der Referenzobjekte in den so gewonnenen Oberflächenabbildern auch eine wechselseitige Zuordnung der Oberflächenabbilder sowie hieraus abzuleitende Daten und geometrische Parameter zu bestimmen.

Nach einer weiteren Ausgestaltung ist der Objekthalter drehbar an der Objektträgereinrichtung gelagert. Die Drehachse des Objekthalters verläuft hierbei typischerweise in der Messebene der Abstandsmesseinrichtung oder sie erstreckt sich parallel zur Messebene. Eine drehbare Lagerung ist für das Vermessen rotationssymmetrischer Objekte in messtechnischer Hinsicht von Vorteil. Ein sich an der Objektträgereinrichtung drehendes Objekt kann von der Abstandsmesseinrichtung radial von außen nach innen oder von innen nach außen während der Drehbewegung des Objekts abgetastet und berührungslos abgescannt werden. Auf diese Art und Weise kann beispielsweise die gesamte Oberfläche des Referenzobjekts vergleichsweise zügig und spiralartig abgetastet werden. Die Abstandsmesseinrichtung muss hierbei nur vergleichsweise langsam oder mit geringer Geschwindigkeit bewegt werden, was für einen zügigen Messprozess von Vorteil ist.

Nach einer weiteren Ausgestaltung kann der Objekthalter auch linear translatorisch an der Objektträgereinrichtung gelagert sein. Dies kann sich zum Beispiel für ein schrittweises Abscannen oder Abtasten von Objekten mit einer Zylindersymmetrie, beispielsweise von Zylinderlinsen als vorteilhaft erweisen. Die Abstandsmesseinrichtung weist nach einer Weiterbildung einen gegenüber dem Referenzobjekt beweglichen Halter auf, an welchem ein Referenzkörper, eine erster Abstandssensor und ein zweiter Abstandssensor angeordnet sind. Der erste und der zweite Abstandssensor sind dabei relativ zum Referenzkörper drehbar gelagert. Der erste und der zweite Abstandssensor können zueinander drehfest gekoppelt sein. Die drehbare Lagerung der Abstandssensoren ist zum Einstellen einer Orthogonalitätsbedingung in Bezug auf die zu vermessende Objektoberfläche von Vorteil. Für das Vermessen der Oberfläche oder für das Abscannen der Oberfläche des Objekts sollte der betreffende Abstandssensor im Wesentlichen orthogonal zum zu vermessenen Oberflächenabschnitt der Objektoberfläche ausgerichtet sein. Für eine derartige Anpassung ist der Sensors sowohl Translations- als auch Drehbewegungen zu unterziehen.

Nach einer weiteren Ausgestaltung sind der erste und der zweite Abstandssensors starr zueinander angeordnet. Der erste Abstandssensor ist im Betrieb der Vorrichtung auf die zu vermessende Oberfläche des Objekts bzw. auf eines der drei Referenzobjekte gerichtet, während der zweite Abstandssensor typischerweise diametral entgegengesetzt dem Referenzkörper zugewandt ist. Der Referenzkörper weist eine der Drehbewegung der beiden Abstandssensoren korrespondierende und systemweit bekannte bzw. zuvor durch Kalibrierung ermittelte Referenzfläche auf. Mittels der beiden diametral entgegengesetzt ausgerichteten ersten und zweiten Abstandssensoren kann der Abstand eines ausgewählten Punkts auf der zu vermessenden Oberfläche des Objekts relativ zum Referenzkörper des Halters der Messeinrichtung präzise bestimmt werden. Die Präzision oder Messtoleranz der Abstandsmessung kann im Bereich von weniger als 1 µm, weniger als 100 nm oder sogar weniger als 10 nm liegen. Der Halter der Abstandsmesseinrichtung selbst ist mittels zumindest weiterer Abstandssensoren hinsichtlich seiner Position gegenüber dem zumindest einen Referenzobjekt im Raum referenziert. Seine Lage ist mittels eines oder mehrerer ergänzender Abstandssensoren in Bezug auf das zumindest eine bzw. in Bezug auf mehrere Referenzobjekte präzise bestimmbar.

Die Referenzfläche des Referenzkörpers des Halters kann beispielsweise als Hohlspiegel mit einer im Wesentlichen kreissegmentartigen Geometrie ausgestaltet sein. Der Mittelpunkt des Hohlspiegels kann typischerweise mit der Drehachse der Abstandsmesseinrichtung zusammenfallen.

Die Abstandssensoren der Abstandsmesseinrichtung sind typischerweise mit mehreren Lichtquellen unterschiedlicher Wellenlänge gekoppelt, um den Abstand zum Objekt oder zum Referenzkörper bzw. Referenzobjekt mittels eines interferometrischen Mehrwellenlängen-Messprinzips zu bestimmen. Als Lichtquellen sind weitgehend monochromatische Laser vorgesehen, deren Wellenlänge im Bereich zwischen 1520 nm und 1630 nm liegt. Mittels eines Mehrwellenlängen-Messverfahrens kann der Eindeutigkeitsbereich der empfangenen Messsignale im Vergleich zu Messprinzipien auf Basis lediglich einer Wellenlänge vergrößert werden. Die jeweilige Phase oder Phasenlage der von der Objektoberfläche reflektierten Lichtstrahlen wird wellenlängenselektiv detektiert und im Zuge einer elektronischen Auswertung zur Bestimmung des Abstandes verarbeitet. Die Abstandssensoren können faseroptisch mit den betreffenden Lichtquellen gekoppelt sein. Etwaige umweltbedingte Störeinflüsse können auf diese Art und Weise auf ein Minimum begrenzt werden.

Nach einem weiteren Aspekt ist ein Verfahren zur geometrischen Vermessung eines Objekts vorgesehen. Das Verfahren sieht vor, einen mit einem zu vermessenden Objekt versehenen Objekthalter in einer ersten Ausrichtung an einem Träger einer Objektträgereinrichtung anzuordnen. Bei dem Träger und der Objektträgereinrichtung handelt es sich typischerweise um den bereits zuvor beschriebenen Träger bzw. um die bereits zuvor beschriebene Objektträgereinrichtung. Danach wird eine erste Oberfläche des Objekts mittels einer Abstandsmesseinrichtung abgescannt. Im Zuge dieses Scannprozesses oder zeitlich versetzt hierzu wird zumindest ein Oberflächenabschnitt eines ersten Referenzobjekts, eines zweiten Referenzobjekts und eines dritten Referenzobjekts einer Referenzstruktur des Objekthalters mittels der Abstandsmesseinrichtung abgescannt. Auf den abgescannten Oberflächen wird schließlich ein erstes Oberflächenabbild erzeugt. Die Erzeugung des Oberflächenabbilds erfolgt rein rechnerisch bzw. computerimplementiert auf Basis einer Vielzahl von aufgenommenen Messpunkten auf der Objektoberfläche und auf Oberflächenabschnitten der Referenzobjekte.

In einem weiteren Schritt wird der Objekthalter in einer zweiten Ausrichtung an der Objektträgereinrichtung angeordnet. Hierbei wird der Objekthalter typischerweise um 180° gedreht, sodass seine Oberseite in der ersten Ausrichtung nun eine Unterseite bildet bzw. dass die in der ersten Ausrichtung nach oben weisende Oberseite nun nach unten weist. Hiernach erfolgt ein Abscannen einer zweiten, der Abstandsmesseinrichtung zugewandten Oberfläche des Objekts und ein Abscannen zumindest eines weiteren Oberflächenabschnitts des ersten Referenzobjekts, des zweiten Referenzobjekts und des dritten Referenzobjekts mittels der bereits vorbeschriebenen Abstandsmesseinrichtung zur Erzeugung eines zweiten Oberflächenabbilds. Das zweite Oberflächenabbild wird analog und entsprechend dem ersten Oberflächenabbild rechnergestützt erzeugt. Hiernach erfolgt ein Zuordnen des ersten und des zweiten Oberflächenabbilds anhand der abgescannten Oberflächenabschnitte der Referenzobjekte. Die Referenzobjekte sind gleichermaßen sowohl in der ersten Ausrichtung als auch in der zweiten Ausrichtung des Objekthalters erkennbar. Rein rechnerisch können das erste und das zweite Oberflächenabbild derart übereinander superponiert oder übereinandergelegt werden, dass die in den jeweiligen Oberflächenabbildern enthaltenen Abbildungen oder Teilabbildungen der Referenzobjekte vollständig überdeckend angeordnet sind.

Auf diese Art und Weise kann die zweite Oberfläche des Objekts hinsichtlich sämtlicher Raumrichtungen und Bewegungsfreiheitsgrade relativ zur ersten Oberfläche des Objekts in Bezug gesetzt werden. Hieraus lassen sich eine Vielzahl geometrischer Eigenschaften und Charakteristika des zu vermessenden Objekts, insbesondere die Dicke, ein Dickenprofil, ein Keilfehler, eine Verkippung der gegenüberliegenden Oberflächen zueinander sowie eine Drehung der Oberflächen zueinander in Bezug auf die optische Achse ermittelt werden.

Nach einer Weiterbildung ist insbesondere vorgesehen, dass im Zuge des Abscannens der Referenzobjekte jeweils ein erster und ein zweiter Oberflächenabschnitt eines jeden Referenzobjekts abgescannt oder abgetastet wird. Bei den Oberflächenabschnitten kann es sich um geradlinige bzw. gekrümmte Trajektorien entlang der Außenoberflächen der Referenzobjekte handeln. Es ist insbesondere vorgesehen, dass jedes der Referenzobjekte in jeder der ersten und zweiten Ausrichtung jeweils aus zwei unterschiedlichen Richtungen abgescannt oder abgetastet wird. Indem jeweils zwei Oberflächenabschnitte eine jeden Referenzobjekts in jeder von erster und zweiter Ausrichtung des Objekthalters abgescannt oder abgetastet werden und sich jene Oberflächenabschnitte in unterschiedliche Richtungen erstrecken oder nicht überlappend an der Außenoberfläche der Referenzobjekte vorgesehen sind, ist es möglich, auf Basis der sensorisch erfassten Oberflächenabschnitte eines jeden Referenzobjekts dessen Mittelpunkt rein rechnerisch zu bestimmen.

Hierzu kann die konkrete Geometrie und Ausrichtung der Referenzobjekte im Zuge einer Kalibrierung systemweit, insbesondere in der Steuerung der Messvorrichtung hinterlegt sein. Insoweit kann auf Basis des ersten Oberflächenabbilds der Mittelpunkt sämtlicher Referenzobjekte bestimmt werden. Ebenfalls kann auf Basis des zweiten Oberflächenabbilds der Mittelpunkt sämtlicher Referenzobjekte bestimmt werden. Durch rechnerische Überlagerung der Mittelpunkte der Referenzobjekte können die gegenüberliegenden Oberflächen der Objekte in den jeweiligen Oberflächenabbildern präzise zueinander in Bezug gesetzt werden.

Nach einem weiteren Aspekt ist schließlich ein Computerprogramm zur geometrischen Vermessung eines Objekts mittels einer zuvor beschriebenen Vorrichtung vorgesehen. Das Computerprogramm weist Programmmittel zum Abscannen einer ersten Oberfläche des Objekts und zumindest eines Oberflächenabschnitts eines ersten Referenzobjekts, eines zweiten Referenzobjekts und eines dritten Referenzobjekts einer Referenzstruktur eines Objekthalters auf, an welchem das Objekt angeordnet ist. Das Computerprogramm weist ferner Programmmittel zur Erzeugung eines ersten Oberflächenabbilds auf Basis der abgescannten Oberfläche des Objekts auf. Von Vorteil sind die abgescannten bzw. abgetasteten Oberflächenabschnitte der Referenzobjekte ebenfalls im ersten Oberflächenabbild enthalten. Das Computerprogramm verfügt ferner über Programmmittel zum Abscannen einer zweiten Oberfläche des Objekts.

Die zweite Oberfläche ist typischerweise der erste Oberfläche gegenüberliegend. Die Programmmittel sind ferner zum Abscannen eines weiteren Oberflächenabschnitts des ersten Referenzobjekts, des zweiten Referenzobjekts und des dritten Referenzobjekts vorgesehen und ausgestaltet. Das Computerprogramm weist ferner Programmmittel zur Erzeugung eines zweiten Oberflächenabbilds auf Basis der abgescannten zweiten Oberfläche des Objekts auf. Im zweiten Oberflächenabbild können die abgescannten Oberflächenabschnitte der Referenzobjekte gleichermaßen enthalten sein. Das Computerprogramm verfügt ferner über Programmmittel zum Zuordnen des ersten und des zweiten Oberflächenabbilds anhand der abgescannten Oberflächenabschnitte der Referenzobjekte. Nach einer Weiterbildung ist hierbei vorgesehen, dass im Zuge des Abscannens von erster und zweiter Oberfläche des Objekts für jedes Referenzobjekt zwei unterschiedliche Oberflächenabschnitte abgescannt werden. Die Oberflächenabschnitte können voneinander beabstandet am Referenzobjekt vorliegen. Somit kann rein rechnerisch auf Basis der zumindest zwei abgescannten Oberflächenabschnitte eines jeden Referenzobjekts jeweils der Mittelpunkt des Referenzobjekts rechnerisch bestimmt werden.

Das Computerprogramm ist insbesondere zur Durchführung des zuvor beschriebenen Verfahrens mithilfe der ebenfalls zuvor beschriebenen Vorrichtung und der Objektträgereinrichtung geeignet und hierzu besonders ausgestaltet. Das Computerprogramm ist typischerweise in der Steuerung der Vorrichtung implementiert und ist insoweit von der Steuerung ausführbar. Das Computerprogramm kann nicht nur einer Auswertung der mittels der Abstandsmesseinrichtung ermittelbaren Oberflächenabbilder dienen, sondern kann ferner auch den Scannvorgang zur Erzeugung der Oberflächenabbilder des Objekts selbsttätig steuern.

Sämtliche in Bezug auf die Objektträgereinrichtung, die Vorrichtung und das beschriebene Verfahren und Vorteile gelten auch gleichermaßen für das hier genannte Computerprogramm; und umgekehrt.

### Kurzbeschreibung der Figuren

Weitere Ziele, Merkmale sowie vorteilhafte Anwendungsmöglichkeiten werden anhand der nachfolgenden Beschreibung eines Ausführungsbeispiels unter Bezugnahme auf die Figuren erläutert. Hierbei zeigen:
- Fig. 1: eine perspektivische Darstellung der Vorrichtung zur geometrischen Vermessung von Objekten,
- Fig. 2: eine Seitenansicht der Vorrichtung gemäß Fig. 1,
- Fig. 3: eine schematische Darstellung des grundlegenden Messprinzips der Abstandsmessein richtung,
- Fig. 4: eine perspektivische Darstellung der Objektträgereinrichtung,
- Fig. 5: eine perspektivische Darstellung der Objektträgereinrichtung bei abgenommenem Objektträger,
- Fig. 5a: eine vergrößerte Detailansicht zur Fig. 5,
- Fig. 6: eine perspektivische Darstellung des Trägers der Objektträgereinrichtung bei abgenommenem Objekthalter,
- Fig. 6a: eine Detailansicht zur Fig. 6,
- Fig. 7: eine perspektivische Darstellung einer Unterseite des Objektträgers,
- Fig. 8: eine perspektivische Darstellung der Oberseite des Objektträgers,
- Fig. 9: eine Draufsicht von oben auf den Objekthalter mit daran vorgesehener Referenzstruktur,
- Fig. 10: ein Flussdiagramm des Verfahrens zur geometrischen Vermessung des Objekts,
- Fig. 11: eine schematische wechselseitige Darstellung von Objekthalter und Abstandsmesseinrichtung zum Abscannen eines ersten Oberflächenabschnitts eines Referenzobjekts,
- Fig. 12: eine weitere wechselseitige Anordnung von Abstandsmesseinrichtung und Objekthalter zum Abscannen eines zweiten Oberflächenabschnitts des Referenzobjekts,
- Fig. 13: eine weitere schematische Darstellung der wechselseitigen Anordnung von Objekthalter und Abstandsmesseinrichtung bei einem sich in seiner zweiten Ausrichtung befindlichen Objekthalter,
- Fig. 14: eine schematische Seitenansicht von Abstandsmesseinrichtung und Objekthalter mit zwei unterschiedlichen Positionen der Abstandsmesseinrichtung zum Abscannen zweier unterschiedlicher Oberflächenabschnitte des Referenzobjekts,
- Fig. 15: eine weitere schematische Darstellung mit zwei weiteren denkbaren Positionen der Abstandsmesseinrichtung,
- Fig. 16: eine vergrößerte isolierte Darstellung des Objekthalters,
- Fig. 16a: ein vergrößertes Detailbild der Fig. 16,
- Fig. 16b: ein vergrößertes Detailbild von Fig. 16,
- Fig. 17: eine schematische Darstellung der Vorrichtung während der Ermittlung eines ersten Oberflächenabbilds,
- Fig. 18: eine schematische Darstellung eines ersten Oberflächenabbilds,
- Fig. 19: eine schematische Darstellung der Vorrichtung während der Ermittlung eines zweiten Oberflächenabbilds,
- Fig. 20: eine schematische Darstellung des zweiten Oberflächenabbilds,
- Fig. 21: eine schematische Darstellung einer Kalibrierung der Referenzobjekte,
- Fig. 22: eine schematische Darstellung der Zuordnung von unterschiedlichen und in unterschiedlichen Ausrichtungen aufgenommenen Oberflächenabschnitte der Referenzobjekte,
- Fig. 23: eine schematische Darstellung der charakteristischen Messgrößen des zu vermessenden Objekts,
- Fig. 24: eine schematische Darstellung der wechselseitigen Zuordnung von erstem und zweitem Oberflächenabbild auf Basis der Referenzobjekte,
- Fig. 25: eine schematische Darstellung der Vorrichtung während der Ermittlung eines zweiten Oberflächenabbilds,
- Fig. 26: eine schematische Darstellung des zweiten Oberflächenabbilds,
- Fig. 27: eine schematische Darstellung der Vorrichtung während der Ermittlung eines ersten Oberflächenabbilds,
- Fig. 28: eine schematische Darstellung eines ersten Oberflächenabbilds,
- Fig. 29: eine schematische Darstellung der charakteristischen Messgrößen des zu vermessenden Objekts,
- Fig. 30: eine schematische Darstellung der wechselseitigen Zuordnung von erstem und zweitem Oberflächenabbild auf Basis der Referenzobjekte.

### Detaillierte Beschreibung

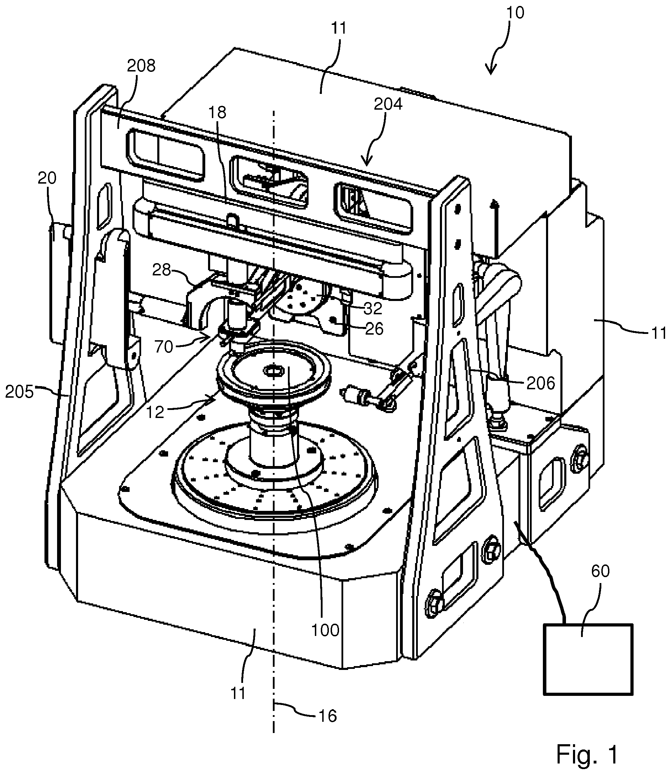

Die in den Figuren 1 bis 3 in unterschiedlichen Darstellungen gezeigte Messvorrichtung 10 weist zwei ortsfeste und zueinander fixierte, vorliegend orthogonal zueinander ausgerichtete Referenzobjekte 18, 20 auf, von denen sich das Referenzobjekt 18 im Wesentlichen in einer ersten Richtung (x) und das zweite Referenzobjekt 20 in einer hierzu senkrechten Richtung (z) erstreckt. An beiden Referenzobjekten 18, 20 sind einzelne Referenzflächen 22, 24 vorgesehen, die typischerweise als Spiegelflächen oder als reflektierende Flächen ausgebildet sind.

Die Vorrichtung 10 weist ferner eine drehbar gelagerte Objektträgereinrichtung 12 auf, an der ein zu vermessendes Objekt 14, wie zum Beispiel eine optische Komponente, etwa eine Linse 14, anordenbar und fixierbar ist. Die Objektträgereinrichtung 12 und ein hieran lösbar fixierbarer Objekthalter 100 sind dabei um eine Drehachse 16 drehbar gelagert. Ferner weist die Messvorrichtung 10 einen in der als Messebene bezeichneten x-z-Ebene beweglichen Halter 26 auf, der an der Basis 11 bezüglich der Messebene (x, z) beweglich ist.

Die Messvorrichtung 10 weist eine Basis 11 und hieran fixiertes Gestell 204 auf, welches die an der Basis angeordnete Objektträgereinrichtung 12 überspannt und welches eine Messebene (x, z) für eine an der Basis 11 beweglich und verstellbar angeordnete Abstandsmesseinrichtung 70 definiert. Das Gestell 204 weist zwei seitliche Schenkel 205, 206 sowie oberhalb eines der Trägereinrichtung 12 einen sich zwischen den Schenkeln 205, 206 erstreckenden Verbindungsbalken 208 auf. An der Unterseite des Verbindungsbalkens 208 ist eines der Referenzobjekte 18 angeordnet, während an einem der nach oben ragenden Schenkel 205 das zweite Referenzobjekt 20 angeordnet ist. Mittels des Gestells 204 sind die Referenzobjekte 18, 20 ortsfest an der Basis 11 angeordnet.

Der Halter 26 weist eine hier nicht näher bezeichnete Grundplatte auf, an welcher ein Referenzkörper 28 sowie ein Lager 32 zur drehbaren Lagerung zweier Abstandssensoren 34, 36 angeordnet sind. Der Referenzkörper 28 weist eine den Abstandssensoren 34, 36 zugewandte, vorliegend etwa nach Art einer Zylinderinnenwandung ausgebildete Spiegel- oder Referenzfläche 30 auf. Diese ist bevorzugt als Hohlspiegel ausgebildet. Die Kontur der Referenzfläche 30 ist zur Kalibrierung der Messeinrichtung 10 präzise zu vermessen. Die Kontur und die einzelnen auf der Referenzfläche 30 abzutastenden Punkte 44 sind hinsichtlich ihrer Position bekannt und in einer Auswerteeinheit einer Steuerung 60 hinterlegt.

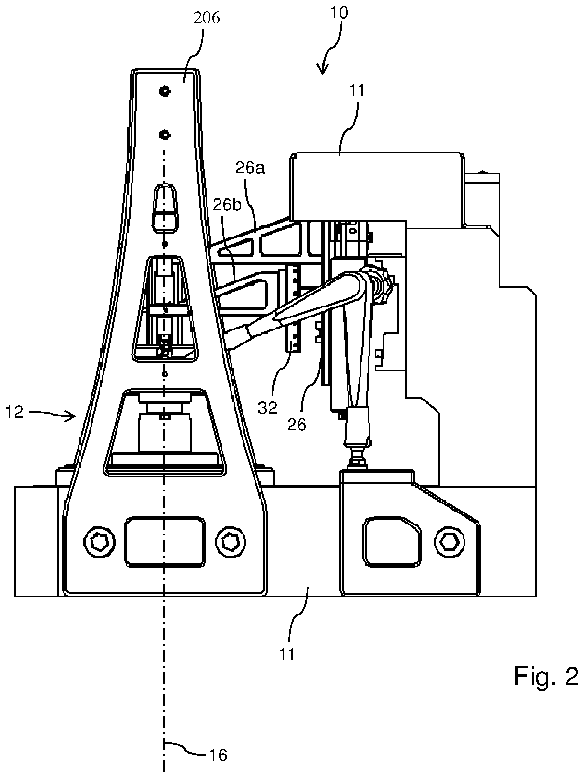

Die Anordnung des Referenzkörpers 28 am Halter 26 erfolgt über einen sich horizontal erstreckenden Ausleger 26a während die Anordnung der Abstandsmesseinrichtung 70 am Halter 26 über einen sich parallel hierzu erstreckenden weiteren, drehbar an der Basis 11 angeordneten Ausleger 26b erfolgt, wie dies in der Seitenansicht der Fig. 2 gezeigt ist.

Die zwei entgegengesetzt ausgerichtete Abstandssensoren 34, 36 aufweisende Abstandsmesseinrichtung 70 ist bezüglich einer Drehachse 33 drehbar am Lager 32 gehalten. Die Drehachse 33 verläuft hierbei bevorzugt orthogonal zu der von den beiden Referenzobjekten 18, 20 aufgespannten Ebene (x, z). Der zum Objekt 14 gerichtete Abstandssensor 34 ist hierbei bevorzugt als Mehrwellenlängen-Sensor ausgebildet der zur Bestimmung eines absoluten Abstands zu einem ausgewählten ersten Punkt 42 auf der zu vermessenden Oberfläche des Objekts 14 ausgestaltet ist.

Die beiden Sensoren 34, 36 sind hierbei zueinander fixiert. Sie sind zudem bezogen auf die Drehachse 33 diametral zueinander ausgerichtet. Eine Veränderung der Ausrichtung des Sensors 34 geht somit stets mit einer entsprechenden Richtungsänderung des Sensors 36 einher.

Der Sensor 34 misst dabei in Reflexionsgeometrie. Das heißt, der auf den Messpunkt 42 gerichtete Messstrahl wird identisch zurückgespiegelt und vom Sensor 34 wieder detektiert und schließlich einer mit dem Sensor 34 gekoppelten, in Fig. 1 angedeuteten Sensor- bzw. Detektionseinheit einer Steuerung 60 zugeführt. Je nach Kontur des zu vermessenden Objekts 14 und der relativen Positionierung des Halters 26 gegenüber dem Objekt 14 ist die Ausrichtung bzw. Orientierung des Sensors 34 zu verändern. Eine Drehung des Abstandssensors 34, 36 um die Drehachse 33 kann jedoch eine Verschiebung des Abstandssensors 34 gegenüber dem Halter 26 mit sich bringen.

Indem der zweite Abstandssensor 36 in einer dem ersten Sensor 34 entgegengesetzten Richtung auf die Referenzfläche 30 des Referenzkörpers 28 ausgerichtet ist, kann eine etwa durch die Drehbewegung der Abstandsmesseinrichtung 70 unweigerlich hervorgerufene Verschiebung in Bezug auf den bekannten Referenzkörper 28 präzise gemessen und im Zuge der elektronischen Auswertung aufgenommener bzw. detektierter Messsignale kompensiert werden.

Erfährt der Sensor 34 etwa rotationsbedingt eine Verschiebung zum Beispiel in Richtung zum Objekt 14, würde dies den zu messenden Abstand 38 verringern. Eine solche Verschiebung würde aber gleichzeitig auch den zweiten Abstand 40, zwischen dem gegenüberliegenden Sensor 36 und der feststehenden Referenzfläche 30 quantitativ um das gleiche Maß vergrößern. Auf diese Art und Weise können etwaige drehbedingte Positionsungenauigkeiten der Abstandsmesseinrichtung 70 präzise vom zweiten Abstandssensor 36 durch Messung eines zweiten Abstands 40 gegenüber einem ausgewählten zweiten Messpunkt 44 auf der Referenzfläche 30 kompensiert werden.

Die Position des Halters 26 gegenüber den Referenzobjekten 18, 20 kann mittels zweier weiterer als Referenzsensoren bezeichneten Abstandssensoren 50, 52 erfolgen, die jeweils den Abstand 48 in z-Richtung bzw. den Abstand 46 in x-Richtung zum jeweiligen Referenzobjekt 18, 20 ermitteln. Auch die Referenzsensoren 50, 52 können dabei als Mehrwellenlängensensoren ausgestaltet sein.

Die Ausrichtung der Abstandssensoren 34, 36 gegenüber der Geometrie bzw. Position des Referenzkörpers 28 ergibt sich durch den zu vermessenden Punkt 42 auf der Oberfläche des Objekts 14. Es ist hierbei denkbar, mittels geeigneter Sensoren und elektromechanischer Stelleinrichtungen den zum Objekt 14 hin gerichteten Abstandssensor 34 stets orthogonal zum jeweiligen Punkt 42 auszurichten. Der hierbei eingestellte Winkel des ersten und/oder des zweiten Abstandssensors 34, 36 kann sodann zur Bestimmung des Abstands 40 Verwendung finden.

Der zu dem vorgegebenen Winkel tatsächlich gemessene Abstandswert 40 kann mit einem im Zuge eines Kalibrierprozesses aufgenommenen Referenzwert verglichen werden. Aus der Abweichung ergibt sich unmittelbar eine Längenkorrektur für den gemessenen Abstand 38.

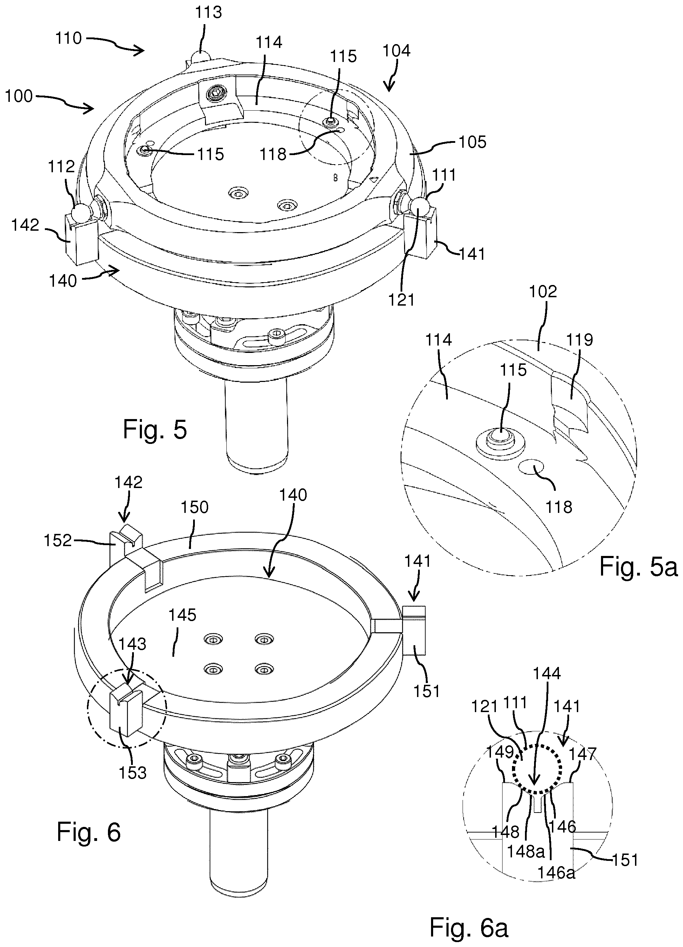

In den Fig. 5 bis 7 ist der an der Trägereinrichtung 12 drehbare Objekthalter 100 schematisch gezeigt. Der Objekthalter 100 weist einen umlaufend geschlossenen Ringkörper 102 auf. Der Ringkörper 102 fungiert als Referenzring. Erweist eine Oberseite 104 und der Oberseite 104 abgewandt eine Unterseite 106 auf. Grundsätzliche sind auch andere geometrische Ausgestaltungen der Objekthalters 100 denkbar.

Radial innenliegend weist der Ringkörper 102 einen nach innen ragenden Flansch 114 auf, der zur Anordnung eines scheibenartig ausgestalteten Objektträgers 116 dient. Am nach innen ragenden Flansch 114 sind beispielsweise drei äquidistant voneinander angeordnete Gegenbefestigungsstellen 120 vorgesehen, die mit entsprechenden Befestigungsstellen 118 des scheibenartigen Objektträgers 116 korrespondieren und dementsprechend mit den Gegenbefestigungsstellen 118 des Objektträgers 116 zur Überdeckung bringbar sind. Der Objektträger 116 kann als eine Art Montageadapter für unterschiedlich große und unterschiedlich dicke zu vermessende Objekte 14 fungieren.

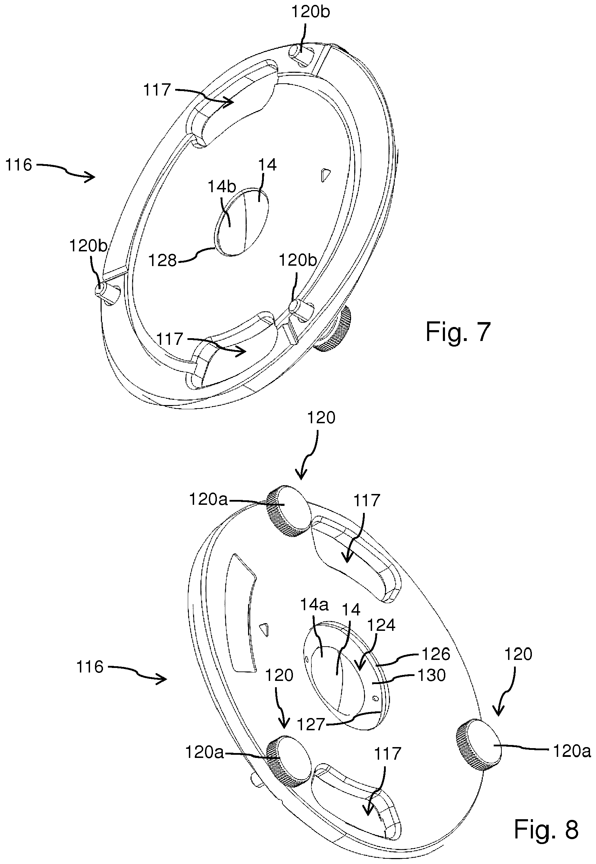

Radial mittig weist der hier scheibenartig ausgestaltete Objektträger 116 einen in Form einer Durchgangsöffnung ausgestalteten Aufnahmebereich 124 auf. Eine Öffnungsberandung des Aufnahmebereichs 124 kann mit einem radial nach innen ragenden Flansch 128 versehen, dessen Außenseite in Fig. 7 angedeutet ist. Weiterhin ist die Öffnungsberandung des Aufnahmebereichs 124 mit einem Innengewinde 126 versehen, in welches ein mit einem entsprechenden Außengewinde 127 versehener Fixierring einschraubbar ist. Zwischen dem Fixierring 130 und dem radial nach innen ragenden Flansch 128 ist das zu vermessende Objekt 14 anordenbar.

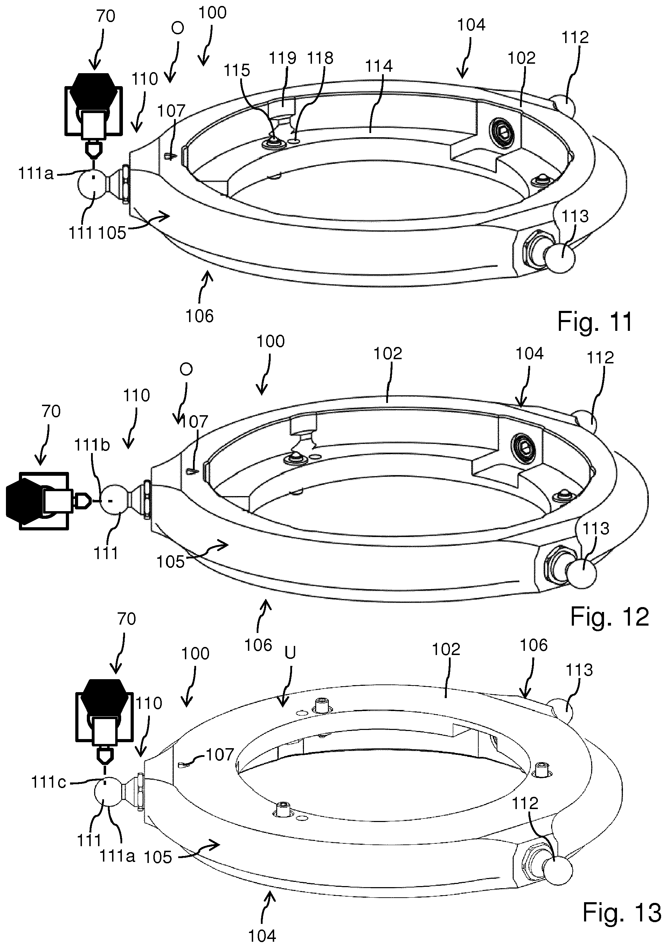

Es ist typischerweise mittels des Fixierrings 130 am Objektträger 116 und damit auch am Objekthalter 100 fixierbar. An der Oberseite 104 als auch an der Unterseite 106 des Ringkörper 102 ist jeweils eine, in den Figuren 11 - 13 angedeutete Markierung 107 vorgesehen, mittels derer der Objekthalter 100 in einer definierten Winkelstellung bezüglich der Drehachse 16 an der Objektträgereinrichtung 12 anordenbar ist.

Über den Umfang des Flanschs 114 verteilt sind mehrere Auflagepunkte 115 angeordnet. Es können beispielsweise drei, über den Umfang des Flanschs 114 verteilt angeordnete Auflagepunkte 115 vorgesehen sein, die eine eindeutige und verkippungsfreie Lagerung eines in den Fig. 7 und 8 isoliert gezeigten Objektträgers 116 ermöglichen. Der Objektträger 116 kann eine scheiben- oder tellerförmige Geometrie aufweisen. Sein Außendurchmesser ist passgenau auf den Innendurchmesser des Ringkörpers 102 abgestimmt. Er kann etwas kleiner als der Innendurchmesser des Ringkörpers 102 ausgestaltet sein. Dies ermöglicht ein passgenaues Einsetzen des Objektträgers 116 in den Ringkörper 102 des Objekthalters 100. Der Außendurchmesser des Objektträgers 116 ist jedoch größer als der Innendurchmesser des Flanschs 114. Auf diese Art und Weise kann der Objektträger 116 axial am Flansch 114, insbesondere an dessen Auflagepunkten 115 auf- oder anliegen.

Die Befestigungselemente 120 können als Rändelschrauben ausgestaltet sein, welche den Objektträger 116 in Axialrichtung durchsetzen.

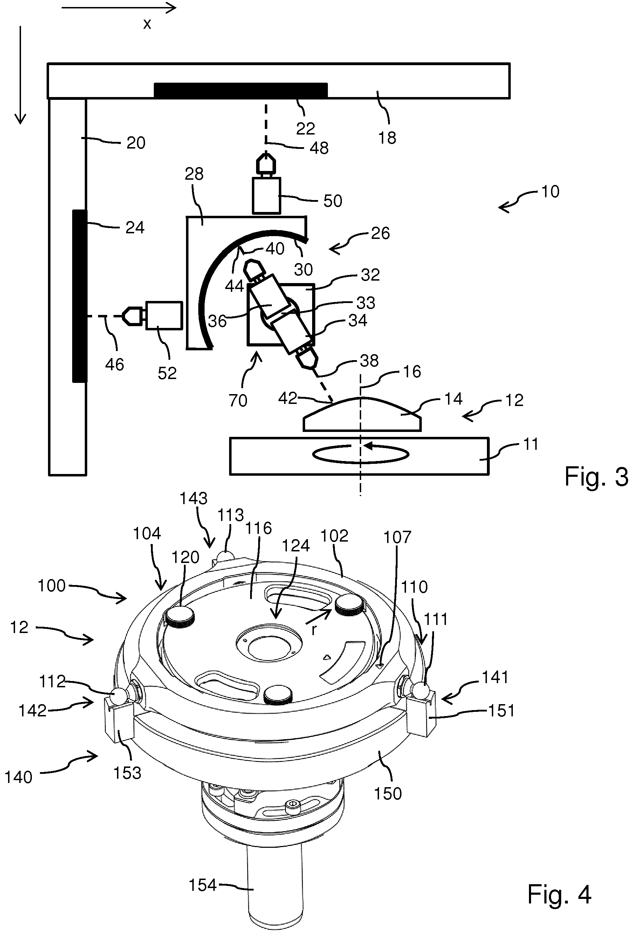

In den Fig. 4 bis 9 ist eine Objektträgereinrichtung 12 schematisch gezeigt. Die Objektträgereinrichtung 12 weist einen Objekthalter 100 und einen Träger 140 auf. Der Träger 140 dient der lösbaren Lagerung des Objekthalters 100. Der Objekthalter 100 weist einen Ringkörpers 102 auf. Der Träger 140 kann drehbar an der Basis 11 der Vorrichtung 10 gelagert sein. Hierzu weist der Träger 140 einen längserstreckten Schaft 154 auf, welcher zugleich eine Drehachse definiert oder welcher mit der Drehachse 16 zusammenfällt. Der Träger 140 weist einen ring- oder tellerförmigen Trägerkörper 145 auf. Dieser kann eine radialsymmetrische oder kreisrunde Kontur aufweisen.

Der Objektträger 116 weist ferner zumindest zwei oder mehrere Durchgangsöffnungen 117 auf. Die Durchgangsöffnungen 117 befinden sich nahe dem Außenrand des Objektträgers 116. Vorliegend sind zwei diametral gegenüberliegende Durchgangsöffnungen 117 vorgesehen. Diese ermöglichen ein Hindurchgreifen durch den Objektträger 116, beispielsweise mittels Daumen und Zeige- oder Ringfinger eines Endanwenders. Hiermit kann der innerhalb des Ringkörpers 102 angeordnete Objektträger 116 ergriffen und bei Bedarf vom Objekthalter 100 abgenommen werden. Wie ferner anhand Fig. 4 und 7 verdeutlicht, weisen die Befestigungselemente 120 jeweils Rändelschrauben mit einem vergleichsweise breiten Kopf 120a auf. Die Befestigungselemente 120 müssen aufgrund der Anordnung der Gegenbefestigungselemente 118 im Bereich des Flanschs 114 relativ weit außen am Objektträger 116 angeordnet sein.

Um eine werkzeugfreie Montage und Demontage bzw. Befestigung und Fixierung des Objektträgers 116 am Objekthalter 100 zu ermöglichen, weisen die Köpfe 120a der Befestigungselemente 120 einen Durchmesser auf, der zumindest das Zweifache, zumindest das Dreifache, zumindest das Vierfache oder das Fünffache des Durchmessers eines Schafts 120b der Rändelschrauben bzw. der Befestigungselemente 120 beträgt. Es kann hierbei vorgesehen sein, dass ein Außenrand des Kopfs 120a vom Außenrand des Objektträgers 116 radial hervorsteht. Um eine passgenaue Anordnung an einer Innenseite des Ringkörpers 102 zu ermöglichen, weist der Ringkörper 102 in Höhe der Gegenbefestigungselemente 118 jeweils eine mit dem Kopf 120a korrespondierende Ausnehmung 119 auf. Die Ausnehmungen 119 sind von oben an der Innenseite des Ringkörpers 102 unmittelbar erkennbar. Die radial nach außen überstehenden Köpfe 120a der Befestigungselemente 120 kommen bei ordnungsgemäßer Befestigung in jenen Ausnehmungen 119 des Objektträgers 116 am Objekthalter 100 zu liegen. Mittels der Ausnehmungen 119 können die Durchmesser der Köpfe 120a auf ein vorgegebenes Maß vergrößert werden, welches ein manuelles und werkzeugloses Festschrauben der Rändelschrauben an den als Gewindebohrungen ausgestalteten Gegenbefestigungselementen 118 ermöglicht. Der Endanwender muss folglich kein scharfkantiges Werkzeug für die Montage des Objektträgers 116 verwenden, von welchem ansonsten eine gewisse Beschädigungsgefahr für das Objekt 14 ausginge.

Der Trägerkörper 145 weist einen ringförmigen Außenrand 150 auf. An dem Außenrand 150 sind mehrere, über den Umfang des Außenrands 150 verteilt angeordnete Lagerabschnitte 141, 142, 143 vorgesehen. An den Lagerabschnitten ist der Objekthalter 100 lagestabil und lösbar positionierbar. Am Objekthalter 100, bzw. am Ringkörper 102 ist eine Referenzstruktur 110 ausgebildet. Diese befindet sich am Außenrand 105 des Ringkörpers 102. Die Referenzstruktur 110 weist ein erstes Referenzobjekt 111, ein zweites Referenzobjekt 112 und ein drittes Referenzobjekt 113 auf. Die drei Referenzobjekte 111, 112, 113 sind über den Umfang des Ringkörpers 102 verteilt am Außenumfang des Objekthalters 100 angeordnet.

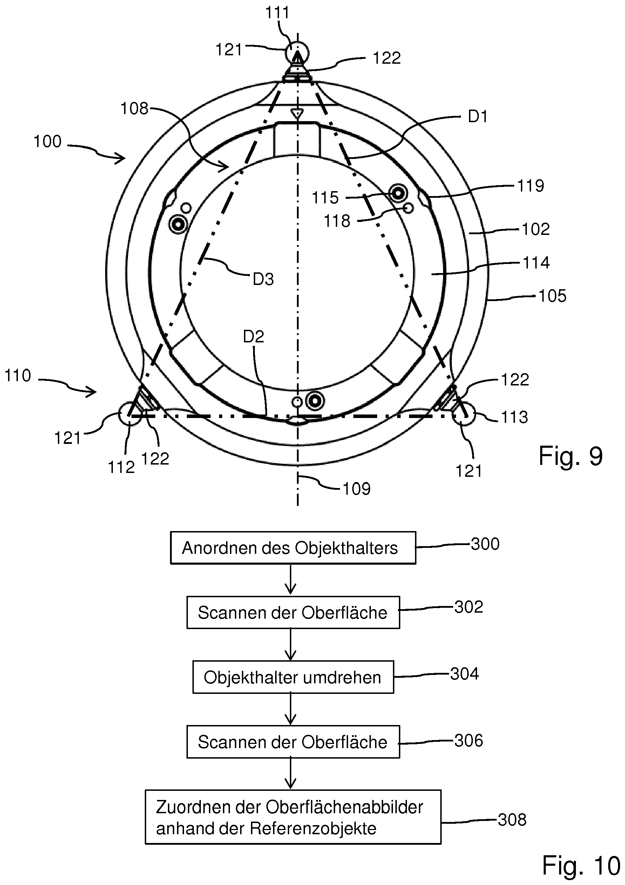

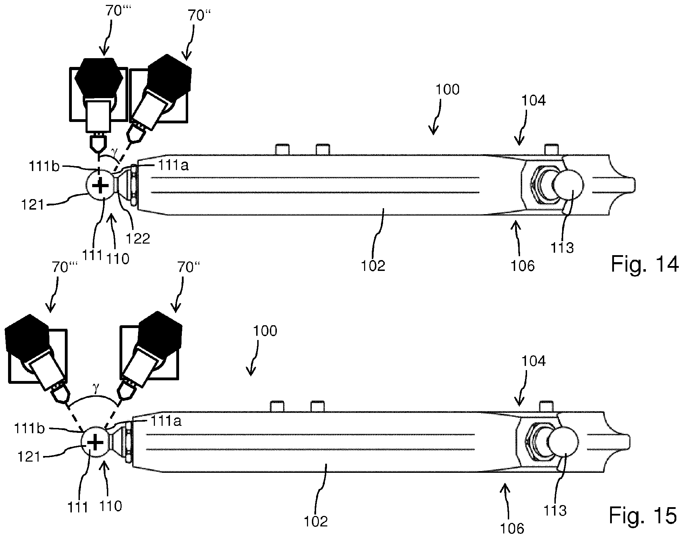

Im gezeigten Ausführungsbeispiel sind sämtliche Referenzobjekte 111, 112, 113 als sphärische Referenzkugeln 121 ausgestaltet. Diese sind, wie in Fig. 9 dargestellt, jeweils über einen Schaftabschnitt 122 mit dem Außenrand 105 des Objekthalters 100, bzw. mit dessen Ringkörper 102 starr verbunden. Die Referenzkugeln 121 weisen dabei einen Durchmesser oder eine Querschnittsfläche auf, die größer ist als der Durchmesser oder der Querschnitt des Schaftabschnitts 122. Der jeweilige Schaftabschnitt 122 kann in Längsrichtung, also radial zur Struktur des Ringkörpers 102 eine konstante Querschnittsfläche oder einen konstanten Durchmesser aufweisen. Im gezeigten Ausführungsbeispiel verjüngen sich die Schaftabschnitte 122 zu den Referenzkugeln 121 hin. In Richtung radial nach außen weisen sie einen sich verjüngenden Querschnitt oder einen kleiner werdenden Durchmesser auf. Auf diese Art und Weise wird erreicht, dass die Referenzkugeln 121 der jeweiligen Referenzobjekte 111, 112, 113 auch dann von der Abstandsmesseinrichtung 70 abscannbar oder ertastbar sind, wenn sich diese oberhalb des Objekthalters 100 und innerhalb des Ringkörpers 102 befindet, wie dies beispielsweise in den Fig. 14 und 15 für die jeweils rechts dargestellte Abstandsmesseinrichtung 70 der Fall ist. Die Schaftabschnitte 122 weisen z.B. einen sich kegelstumpfförmig radial nach außen verjüngenden Querschnitt auf.

Wie insbesondere in Fig. 9 dargestellt, befinden sich die Referenzobjekte 111, 112, 113 an den Ecken eines gedachten Dreiecks 108. Das Dreieck 108 ist vorliegend als gleichschenkliges, nicht gleichseitiges Dreieck ausgestaltet. Das erste Referenzobjekt 111 ist in einem ersten Abstand D1 vom zweiten Referenzobjekt 112 angeordnet. Das zweite Referenzobjekt 112 ist in einem zweiten Abstand D2 vom dritten Referenzobjekt 113 angeordnet und das dritte Referenzobjekt 113 ist in einem dritten Abstand vom D3 vom ersten Referenzobjekt 111 angeordnet. Vorliegend unterscheidet sich zumindest einer der drei Abstände von den beiden übrigen Abständen. Im gezeigten Ausführungsbeispiel unterscheidet sich der Abstand D2 von den Abständen D1 und D3. Die Abstände D1 und D3 sind identisch. Der Abstand D2 ist gegenüber den Abständen D1 und D3 etwas geringer. Mithin unterscheidet sich der erste Abstand D1 vom zweiten Abstand D2. Bei anderen Ausgestaltungen ist denkbar, dass alle drei Abstände D1, D2 und D3 voneinander unterschiedlich sind. Die Referenzobjekte 111, 112, 113 liegen dann an den Ecken eines Dreiecks mit unterschiedlich langen Seiten.

Mittels der nach außen abragenden Referenzobjekte 111, 112, 113 ist der Objekthalter 100 in zwei unterschiedlichen Ausrichtungen, nämlich in einer ersten Ausrichtung O, wie in den Fig. 11 und 12 gezeigt und auch in einer Ausrichtung U, wie in Fig. 13 gezeigt, am Träger 140 lagestabil positionierbar oder fixierbar. Die mit den Referenzobjekten 111, 112, 113 korrespondierenden Lagerstellen 141, 142, 143 des Trägers 140 sind ebenfalls an den Ecken eines Dreiecks angeordnet. Eine erste Lagerstelle 141 weist dabei einen ersten Lagerabstand zur zweiten Lagerstelle 142 auf. Die zweite Lagerstelle 142 weist einen zweiten Lagerabstand zur dritten Lagerstelle 143 auf. Die dritte Lagerstelle 143 weist schließlich einen dritten Lagerabstand zur ersten Lagerstelle 141 auf. Auch hier unterscheidet sich der erste Lagerabstand vom zweiten Lagerabstand oder vom dritten Lagerabstand.

Für die Anordnung des Objekthalters 100 am Träger 140 ist vorgesehen, das erste Referenzobjekt 111 an der ersten Lagerstelle 141 zu platzieren. In seiner ersten Ausrichtung O weist der Objekthalter 100 mit seiner Oberseite 104 nach oben. Seine Unterseite 106 weist nach unten, folglich dem darunterliegenden Träger 140 zugewandt. In der zweiten Ausrichtung U ist der Objekthalter 100 um 180° gedreht. Die Drehachse 109 verläuft hierbei durch das erste Referenzobjekt 111 und durch den Mittelpunkt des Ringkörpers 102. In der zweiten Ausrichtung U ist vorgesehen, dass das erste Referenzobjekt 111 an der ersten Lagerstelle 141 anliegt, dass das zweite Referenzobjekt 112 an der dritten Lagerstelle 143 anliegt und dass das dritte Referenzobjekt 113 an der zweiten Lagerstelle 142 anliegt. Eine derart vertauschte Anordnung von zweitem und drittem Referenzobjekt 112, 113 an der zweiten und dritten Lagerstelle 142, 143 ist insbesondere bei Ausgestaltung eines gleichschenkligen Dreiecks 108 möglich. Dadurch dass sich der erste Abstand D1 von zumindest einem von zweiten Abstand D2 und dritten Abstand D3 unterscheidet, kann der Objekthalter 100 in seiner ersten Ausrichtung O in lediglich einer einzigen lagestabilen Position am Träger 140 positioniert werden.

Würde man das erste Referenzobjekt 111 beispielsweise an der zweiten Lagerstelle 142 oder an der dritten Lagerstelle 143 anordnen, so würden die übrigen Referenzobjekte 112, 113 nicht mit den übrigen Lagerstellen 141, 142, 143 zusammenfallen. Die spiegelsymmetrische Anordnung der zweiten und dritten Referenzobjekte 112, 113 stellt sicher, dass der Objekthalter 100 sowohl in seiner ersten Ausrichtung O als auch in seiner zweiten Ausrichtung U jeweils nur und ausschließlich mit dem ersten Referenzobjekt 111 an der ersten Lagerstelle 141 positionierbar ist.

Den Referenzobjekten 111, 112, 113, mithin der hiervon gebildeten Referenzstruktur 110 kommt vorliegend eine Doppelfunktion zu. Zum einen bilden sie eine Referenz für das Abscannen oder Abtasten der gegenüberliegenden Oberflächen 14a, 14b des Objekts 14, welches am Objekthalter 100 befestigbar ist. Zum anderen erfolgt eine lagestabile Positionierung des Objekthalters 100 ausschließlich über die Referenzobjekte 111, 112, 113 am Träger 140.

Die einzelnen Lagerabschnitte 141, 142, 143 weisen jeweils eine in etwa V-förmige Nut 144 auf, wie dies vergrößert in Fig. 6a dargestellt ist. Die Nut 144 weist zwei gegenüberliegende und zu einer Horizontalen geneigt verlaufende Schenkel 146, 148 auf. An ihren unteren, aneinander zugewandten Enden oder Endabschnitten 146a, 148a weisen die Schenkel 146, 148 einen minimalen horizontalen Abstand auf. An ihren oberen Endabschnitten 147, 149 weisen die Schenkel 146, 148 einen maximalen horizontalen Abstand auf. Die Schenkel 146, 148 weisen angrenzend oder im Bereich der unteren Endabschnitte 146a, 148a eine vorgegebene Steigung gegenüber der Horizontalen z.B. in einem Bereich von 30° bis 75°, bspw. von etwa 45 ° auf. Nach oben hin und zu den oberen Endabschnitten 147, 149 verringert sich die Steigung der Schenkel 146, 148. Die Schenkel 146, 148 erstrecken sich nach oben hin und mit ihren oberen Endabschnitten 147, 149 in ein nahezu horizontales Plateau. Mithin verlaufen die oberen und voneinander abgewandten Endabschnitte 147, 149 der Schenkel 146, 148 horizontal abgeflacht.

Die Ausgestaltung von in etwa eben, in Horizontalrichtung verlaufenden Plateaus an den oberen Endabschnitten 147, 149 der Schenkel 146, 148 ist für ein sanftes, beschädigungsfreies Anlegen der Referenzobjekte 111, 112, 113 an den Lagerabschnitten 141, 142, 143 von Vorteil. Selbst ein unachtsames Auflegen der Referenzobjekte 111, 112, 113 an den Lagerabschnitten 141, 142, 143 führt nicht zu etwaigen Beschädigungen an den Schenkeln 146, 148 oder an den Referenzobjekten 111, 112, 113.

In Fig. 6a ist der Außenumriss einer Referenzkugel 121 am Beispiel des Referenzobjekts 111 gezeigt. Der Außenumfang bzw. der Durchmesser der Referenzkugel 121 ist kleiner als der horizontale Abstand zwischen den oberen Endabschnitten 147, 149 der Nut 144. Auf diese Art und Weise ist sichergestellt, dass die Kontaktflächen des Referenzobjekts 111 mit der Nut 144 im Bereich der schräg verlaufenden Schenkel 146, 148 liegen. Die V-förmige Nut 144 ermöglicht eine selbstzentrierende, reproduzierbare Lagerung der Referenzobjekte 111, 112, 113 an den jeweiligen Lagerabschnitten 141, 142, 143.

Die Längsrichtungen der Nuten 144 der jeweiligen Lagerabschnitte 141, 142, 143 verlaufen typischerweise in Radialrichtung, das heißt radial nach innen zum Mittelpunkt des ringförmigen Außenrands 150. Bezogen auf eine Kreis- oder Ringgeometrie kann die Längsrichtung des Lagerabschnitts 141 in etwa um 120° zur Längsrichtung des Lagerabschnitts 142 gedreht sein. Der dritte Lagerabschnitt 143 kann zu den beiden übrigen Lagerabschnitten 141, 142 ebenfalls um in etwa +/- 120° gedreht sein. Eine Drehung der Lagerabschnitte 141, 142, 143 um jeweils 120° würde eine Anordnung der Lagerabschnitte 141, 142, 143 an den Ecken eines gleichseitigen Dreiecks entsprechen. Nach der vorliegenden Ausgestaltung ist zumindest eine geringfügige Abweichung von einer Geometrie eines gleichseitigen Dreiecks vorgesehen. Insoweit sind auch die Winkelabstände der Lagerabschnitte 141, 142, 143 bzw. die Winkelabstände der Längsrichtungen der jeweiligen Nuten 144 geringfügig von 120° abweichend.

Die Zentren der Nuten 144 weisen untereinander dieselben Abstände wie die Zentren der Referenzobjekte 111, 112, 113 auf. Somit können die Referenzobjekt 111, 112, 113 passgenau auf den Lagerabschnitten 141, 142, 143 platziert und gelagert werden. Die Lagerung der Referenzkugeln 121 eines jeden Referenzobjekts 111, 112, 113 in den Nuten 144 der einzelnen Lagerabschnitte 141, 142, 143 bewirkt eine Zentrierung einer jeden Referenzkugel 121 auf das Zentrum einer jeden Nut 144. Dadurch dass die Nuten 144 unterschiedlich ausgerichtet sind, ergibt sich eine reproduzierbare, stets gleichbleibende, selbstzentrierende Lagerung des Objekthalters 100 in der Ebene des Trägers 140 bzw. seines scheiben- oder tellerförmigen Trägerkörpers 145. Eine stets gleichbleibende, reproduzierbare und positionsgetreue Lagerung des Objekthalters 100 am Träger 140 bezogen auf die Radialrichtung (r) ist für das Abscannen der Oberflächen 14a, 14b des Objekts 14 sowie für das Erfassen der Referenzobjekte 111, 112, 113 von Vorteil. Nachdem eine erste Messung bei einem sich in seiner ersten Ausrichtung O befindlichen Objekthalters 100 durchgeführt wurde, kann durch Drehen des Objekthalters dieser hinsichtlich seiner Referenzobjekte 111, 112, 113 wieder eine identische Position einnehmen. Das Anfahren und Auffinden der einzelnen Referenzobjekte 111, 112, 113 für einen nachfolgenden Scann- oder Abtastprozess kann auf diese Art und Weise vereinfacht und verkürzt werden. Messzyklen bzw. Taktzeiten für die Durchführung einzelner Messungen an unterschiedlichen Seiten des Objekthalters 100 können auf diese Art und Weise verkürzt werden.

Wie insbesondere in Fig. 6 gezeigt, befinden sich die Lagerabschnitte 141, 142, 143 an den nach oben ragenden Oberseiten jeweiliger erster, zweiter und dritter Lagerkörper 151, 152, 153. Die Lagerkörper 151, 152, 153 sind am radial außenliegenden Außenrand des Außenrandes 150 des Trägers 140 angeordnet. Sie stehen somit in Radialrichtung vom Außenrand 150 über. Dies ermöglicht eine ungehinderte Zugänglichkeit zu den Lagerkörpern 151, 152, 153. Die Lagerkörper 151, 152, 153 können lösbar und/oder justierbar am Außenrand 150 angeordnet sein. Mit ihren nach oben ragenden oder obenliegenden Lagerabschnitten 141, 142, 143 stehen die Lagerkörper 151, 152, 153, bezogen auf die Drehachse 16 axial von einer Oberseite des Außenrands 150 des Trägers 140 bzw. des Trägerkörpers 145 hervor. Dies ermöglicht eine, bezogen auf die Vertikale oder bezogen auf die Axialrichtung beabstandete Anordnung des Objekthalters 100 am Träger 140. Der Objekthalter 100 kann auf diese Art und Weise ausschließlich über seine Referenzstruktur 110, mithin ausschließlich über die Referenzobjekte 111, 112, 113 an den nach oben hervorstehenden Lagerabschnitten 141, 142, 143 verkippungsfrei und lagestabil positioniert werden.

Die nach außen, vom Außenrand 105 des Objekthalters 100 abragenden Referenzobjekte 111, 112, 113 ermöglichen eine besonders einfache und intuitive Handhabung beim Platzieren und Umdrehen des Objekthalters. Die Auflagepunkte, mithin die Referenzobjekte 111, 112, 113 sind für den Endanwender intuitiv erkennbar. Ferner wird durch die außenliegenden Referenzobjekte 111, 112, 113 ein Abtasten oder Abscannen von Oberflächenabschnitten der Referenzobjekte aus unterschiedlichen Richtungen ermöglicht, wie dies beispielhaft in den Fig. 11 bis 15 angedeutet ist. Eine Zugänglichkeit zu den Referenzobjekten 111, 112, 113 von außen, insbesondere von radial außen, ist für die präzise Bestimmung und Lage der Referenzobjekte, insbesondere für eine rechnerische Bestimmung ihrer Mittelpunkte von Vorteil.

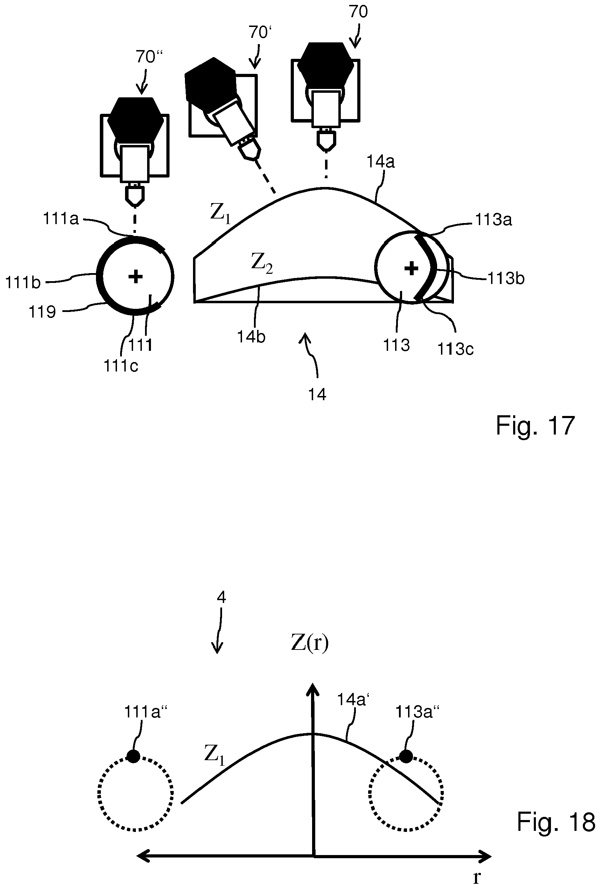

In den Fig. 11 bis 15 sind unterschiedliche Positionen und Ausrichtungen der Abstandsmesseinrichtungen 70 zur Vermessung und zum Scannen der Lage der Referenzobjekte 111, 112, 113, jeweils am Beispiel des ersten Referenzobjekts 111 gezeigt. Die Lage der Referenzobjekte muss in jeder Ausrichtung O, U des Objekthalters 100 ermittelt werden, um die zusammen mit den Referenzobjekten 111, 112, 113 abgescannte oder abgetastete Oberfläche 14a, 14b des Objekts 14 in einen festen Bezug zu den Referenzobjekten 111, 112, 113 setzen zu können. In den Fig. 17 bis 24 ist das Verfahren zur geometrischen Vermessung des Objekts 14 schematisch dargestellt. In der Konfiguration der Fig. 17 und 18 ist der Objekthalter 100 in seiner ersten Ausrichtung O am Träger 140 gelagert. Seine obenliegende Oberfläche 14a ist dabei der Abstandsmesseinrichtung 70 zugewandt.

Zur Bestimmung eines in Fig. 18 schematisch gezeigten ersten Oberflächenabbilds 4 wird der Objekthalter 100 zusammen mit dem Träger 140 bezüglich der in Fig. 1 skizzierten Drehachse 16 in Rotation versetzt, während der der Oberfläche 14a zugewandte Abstandssensor 34 die Oberfläche 14a mittels einer Radialbewegung berührungslos abtastet oder abscannt. Die Oberfläche 14a wird z.B. spiralförmig abgescannt. Nachdem die Oberfläche 14a abgescannt wurde, werden mittels der Abstandsmesseinrichtung 70 die einzelnen Referenzobjekte 111, 112, 113 nacheinander abgetastet oder abgescannt. Hierbei wird jeweils zumindest ein Oberflächenabschnitt 111a eines jeden Referenzobjekts 111, 112, 113 abgetastet oder abgescannt. Bei dem abgescannten Oberflächenabschnitt 111a kann es sich um eine abgescannte Linie entlang der Außenoberfläche des betreffenden Referenzobjekts 111 handeln. In Fig. 17 sind drei verschiedene Positionen für die Abstandsmesseinrichtung 70 angedeutet. Zu Beginn eines Scannvorgangs befindet sich die Abstandsmesseinrichtung 70 in etwa zentrisch oberhalb des abzuscannenden Objekts 14.

Alsdann wird sie radial nach außen bewegt und nimmt eine Position 70' ein. Schließlich wird die Abstandsmesseinrichtung 70" ganz nach radial außen verbracht, um den Oberflächenabschnitt 111a des Referenzobjekts 111 und schließlich auch entsprechende Oberflächenabschnitte 112a, 113a der beiden übrigen Referenzobjekte 111, 112, 113 abzuscannen. Die abgescannten oder anderweitig sensorisch erfassten, beispielsweise auch taktil erfassten Oberflächenabschnitte 111a, 113a sind in Fig. 18 zusammen mit der abgetasteten Oberfläche 14a des Objekts 14 gezeigt. In Fig. 18 ist sozusagen ein erstes Oberflächenabbild 4 des Objekts 14 und der Referenzstruktur 110 als Position Z in Axialrichtung in Abhängigkeit des Radius (r) schematisch dargestellt.

Aufgrund der positionsgetreuen Lagerung, welche mittels den Nuten 144 der Lagerabschnitte 141, 142, 143 in Kombination mit den Referenzkugeln 121 möglich ist, kann die Messvorrichtung 10, eine entsprechende Kalibrierung vorausgesetzt, präzise Kenntnis über die Lage der einzelnen Referenzobjekte 111, 112, 113 haben, sodass für eine hochpräzise Messung im Submikrometerbereich zumindest für eine Profilmessung oder Dickenmessung Z(r) des Objekts 14 ausreichend ist, wenn an den Referenzobjekten 111, 112, 113 lediglich ein einziger Oberflächenabschnitt 111a, 112a, 113a angesteuert und abgescannt wird. Der abgescannte Oberflächenabschnitt 111a kann beispielsweise, bezogen auf eine Vertikale, im oder um den Scheitelpunkt der Referenzkugel liegen. Mithin kann der Oberflächenabschnitt 111a auch den Scheitelpunkt kreuzen, wie dies beispielsweise anhand der punktförmig dargestellten abgescannten Oberflächenabschnitte 111a', 113a' gemäß der Fig. 18 dargestellt ist.

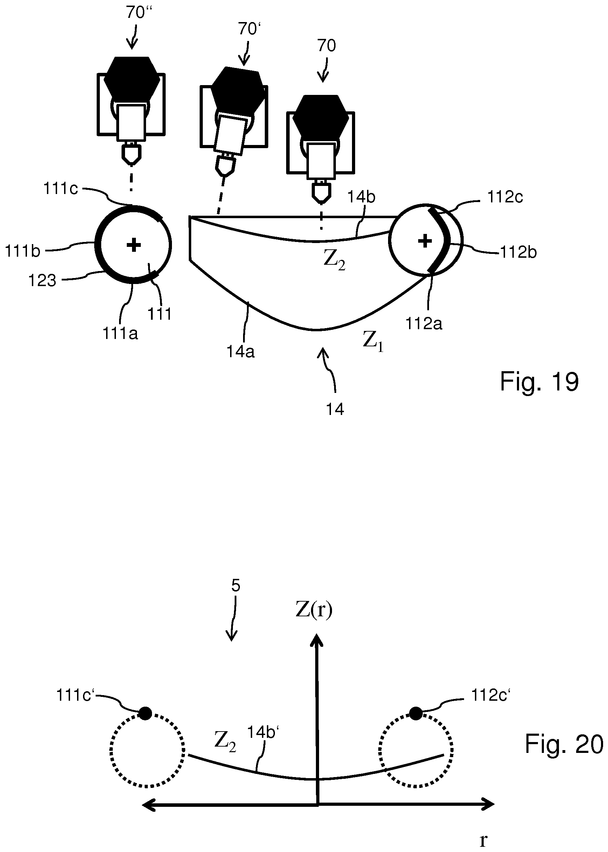

Die Fig. 17 und 18 geben somit die Verfahrensschritte 300 und 302 gemäß dem Flussdiagramm nach Fig. 10 wieder. In einem ersten Verfahrenschritt 300 wird der Objekthalter 100 mit dem daran befindlichen Objekt 14 am Träger 140 angeordnet. In einem nachfolgenden Schritt 302 wird durch eine Relativbewegung der Abstandsmesseinrichtung 70 und dem Objekt 14 sowie der Referenzstruktur 110 sowohl die erste Oberfläche 14a des Objekts 14 als auch ausgewählte Oberflächenabschnitte 111 a, 112a, 113a der einzelnen Referenzobjekte 111, 112, 113 abgescannt oder erfasst. In einem nachfolgenden Schritt 304 wird der Objekthalter 100, wie bereits beschrieben, umgedreht. Das zweite und das dritte Referenzobjekt 112, 113 vertauschen hierbei ihre Positionen. Alsdann werden sowohl die zweite Oberfläche 14b des Objekts 14 als auch die der Abstandsmesseinrichtung 70 zugewandten Oberflächenabschnitte 111b, 112b, 113b mittels der Abstandsmesseinrichtung 70 abgescannt und erfasst. Die Bezugsziffern 70, 70' und 70" geben dabei die variierende Position der Abstandsmesseinrichtung 70 relativ zum Objekthalter 100 wieder. Das Vermessen der zweiten Oberfläche 14b bzw. der Unterseite 106, wie in Fig. 19 dargestellt, erfolgt analog und quasi identisch zur Erfassung bzw. zum Abscannen der Oberseite 104, wie dies zur Fig. 17 gezeigt und erläutert wurde.

Demgemäß kann auf Basis der in Fig. 19 durchgeführten Messung eines zweites Oberflächenabbild 5 bestimmt werden, welches einerseits ein Abbild 14b' der zweiten Oberfläche 14b des Objekts 14 als auch ein Abbild 111b', 112b', 113b' der abgescannten Oberflächenabschnitte 111b, 112b, 113b zeigt. In der Seitenansicht der Figuren 17 und 19 sind stets nur zwei der insgesamt drei Referenzobjekte gezeigt. Es versteht sich von selbst, dass für die Referenzierung der Oberflächen 14a, 14b des Objekts 14 relativ zur Referenzstruktur 110 immer alle drei Referenzobjekte 111, 112, 113 erfasst bzw. abgescannt werden.

Die in den Oberflächenabbildern enthaltenen Abbildungen oder Darstellungen 111b', 112b' werden im Zuge des Scannprozesses oder der Abtastung in einen festen Bezug zur ebenfalls abgescannten Oberfläche 14b bzw. 14b' gesetzt.

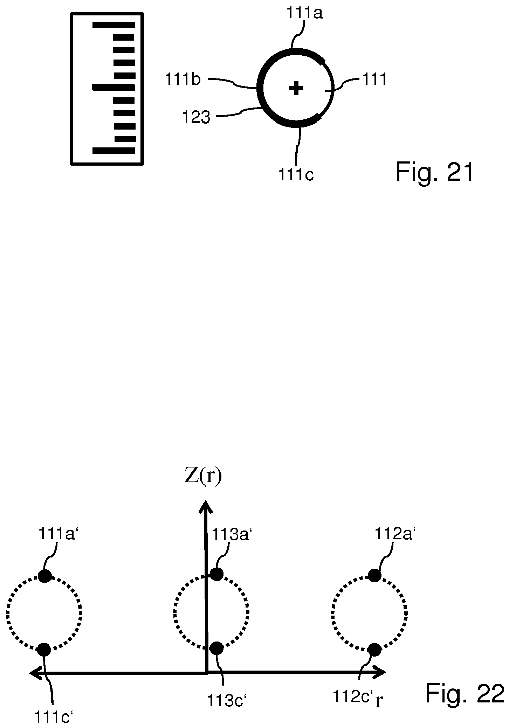

In Fig. 21 ist eine Kalibrierung der Referenzobjekte am Beispiel des Referenzobjekts 111 dargestellt. Das Referenzobjekt 111 weist eine Referenzkugel 121 mit einer sphärischen Außenoberfläche auf. Ein Teilbereich 123 der Außenoberfläche ist prinzipiell zum Abscannen durch die Abstandsmesseinrichtung 70 geeignet. Im Zuge der Kalibrierung kann jener von außen, von oben und/oder von unten zugängliche Teilbereich 123, welcher in Fig. 21 durch eine größere Strichdicke gekennzeichnet ist, hochpräzise vermessen und in der Steuerung der Messanordnung 10 hinterlegt werden. Im Zuge einer Messung können insbesondere ausgewählte Oberflächenabschnitte 111a, 111b, 111c für die Lage- und Positionserkennung des betreffenden Referenzobjekts 111 abgescannt oder sensorisch erfasst werden.

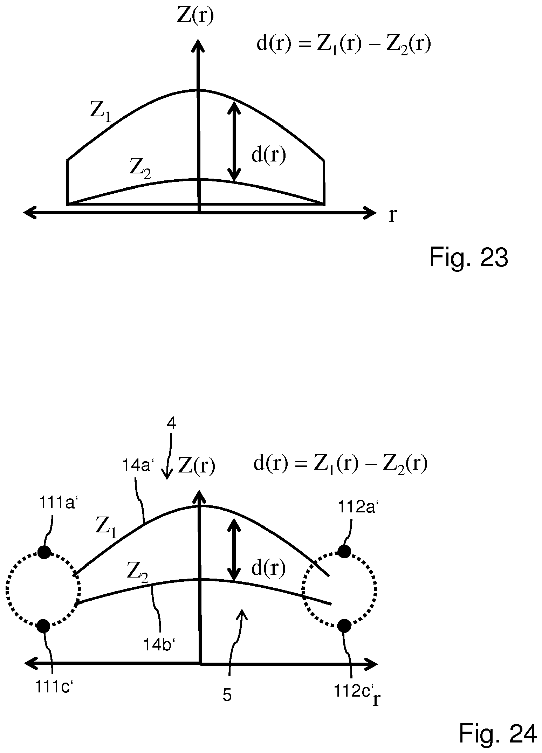

Aufgrund der Kalibrierung ist die relative Lage der beispielsweise in Fig. 22 gegenüberliegenden Oberflächenabschnitte 111a, 111b und folglich auch deren Abbilder 111a', 111b', 111c' bekannt. Beim Abscannen der ersten Oberfläche 14a und bei Erzeugung des ersten Oberflächenabbilds 14a' wird beispielsweise der Oberflächenabschnitt 111a abgescannt und ein entsprechendes Abbild 111a' erfasst. Beim Abscannen der gegenüberliegenden Oberfläche 14b und bei Erzeugung des zweiten Oberflächenabbilds 5 wird der Oberflächenabschnitt 111c abgescannt und es wird ein entsprechendes Abbild 111c' ermittelt. Anhand der aufgrund der Kalibrierung in einem festen Bezug zueinanderstehenden Oberflächenabschnitte 111a, 111c und deren Abbilder 111a', 111c' in den Oberflächenabbildern 4, 5 können die Oberflächenabbilder 4, 5, wie in Fig. 24, zueinander in Bezug gesetzt werden.

Die Zuordnung der Oberflächenabschnitte 111a, 111c sowie die Zuordnung entsprechender Oberflächenabschnitte der beiden weiteren Referenzobjekte 112, 113 wird rein rechnerisch vorgenommen. Auf diese Art und Weise können die Oberflächenabbilder 14a' und 14b' präzise zueinander rechnerisch angeordnet werden. Wird, wie in den beiden Messungen der Fig. 17 und 19 lediglich ein einziger Oberflächenabschnitt 111a, 111c eines jeden Referenzobjekts 111, 112, 113 erfasst oder abgescannt, ermöglicht dies zumindest eine präzise Überlagerung der beiden Oberflächenabbilder 4, 5 bezüglich der Vertikalen. Eine Dicke oder ein Dickenprofil Z(r) des Objekts 14, wie in Fig. 23 dargestellt, kann auf diese Art und Weise auf Basis der abgescannten Oberflächen 14a', 14b', wie in Fig. 24 angedeutet, z.B. rechnerisch durch Subtraktion eines ersten Oberflächenprofils Z₁(r) und einer zweiten Oberflächenprofils Z2(r) bestimmt werden.

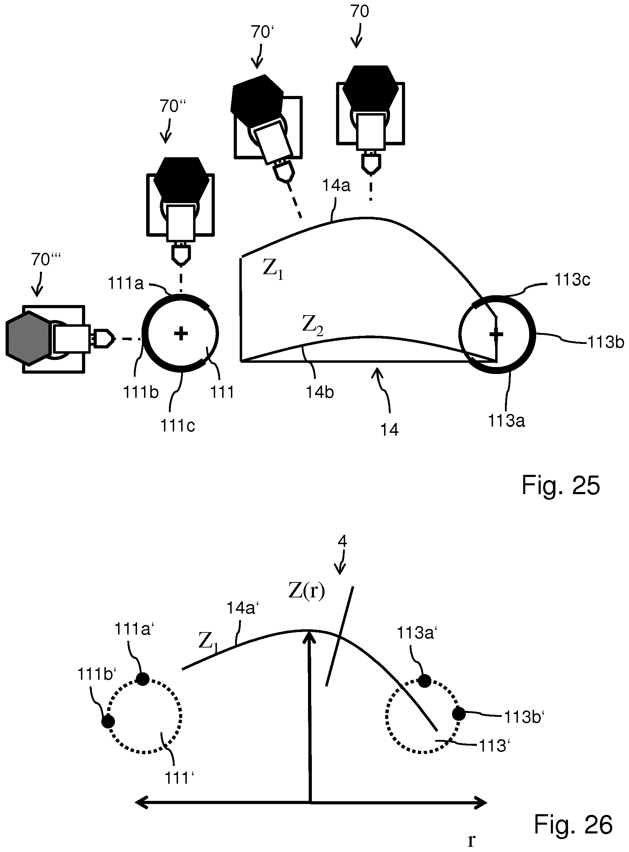

Nach einer Weiterbildung können mit der Messvorrichtung 10 und der hier vorgestellten wechselseitigen Anordnung von Objekthalter 100 und Träger 140 jedoch nicht nur das Profil oder die Dicke eines Objekts 14, sondern auch ein Keilfehler α1 sowie eine Dezentrierung α2 eines Objekts 14 präzise bestimmt und ermittelt werden. Hierzu wird ebenfalls gemäß der Fig. 25 und 26 ein erstes Oberflächenabbild 4 von Objekt 14 und von der Referenzstruktur 110 aufgenommen. Das Vorgehen ist hierbei analog zu der zu den Fig. 17 und 18 beschriebenen Art und Weise. Die Abstandsmesseinrichtung 70 beginnt etwa radial mittig, wird dann gemäß 70' radial nach außen geführt und in ihrer Position 70" auf zum Beispiel das erste Referenzobjekt 111 gerichtet. Alsdann wird, wie bereits zuvor beschrieben, ein erster Oberflächenabschnitt 111a des Referenzobjekts 111 abgetastet oder abgescannt.

Hiernach kann beispielsweise durch Drehen des Trägers 140 der nächste erste Oberflächenabschnitt 112a des zweiten Referenzobjekts 112 und schließlich auch der erste Oberflächenabschnitt 113a des dritten Referenzobjekts 113 abgescannt werden. In einem nachfolgenden Verfahrensschritt werden dann allerdings noch jeweils zweite Oberflächenabschnitte 111b, 112b, 113b sämtlicher Referenzobjekte 111, 112, 113 sensorisch erfasst oder abgescannt. Dies ist durch die links außen gezeigte Abstandsmesseinrichtung 70''' in Fig. 25 symbolisiert. Im ersten Oberflächenabbild 4 gemäß Fig. 26 werden somit zu jedem Referenzobjekt 111, 112, 113 zwei Oberflächenabschnitte 111a, 111b, 112a, 112b, 113a, 113b erfasst.

Die Oberflächenabschnitte können beispielsweise in Form zweier sich schneidender Geraden oder Linien auf der Außenoberfläche der jeweiligen Referenzkugeln 121 verlaufen. Durch Abtastung oder durch Abscannen jeweils zweier Oberflächenabschnitte eines jeden Referenzobjekts 111, 112, 113 können im entsprechenden ersten Oberflächenabbild 4 jeweils zwei Abbilder 111a', 111b' sowie 113a', 113b' enthalten sein. Eine entsprechende Kalibrierung vorausgesetzt, kann alsdann der Objekthalter 100 um 180° gedreht am Halter 140 angeordnet werden. Das Messverfahren wird erneut quasi identisch durchgeführt. Hierbei werden neben einem Oberflächenabbild 14b' abermals zwei Oberflächenabschnitte 111c, 112 eines jeden Referenzobjekts 111, 112, 113 sensorisch erfasst oder abgetastet.

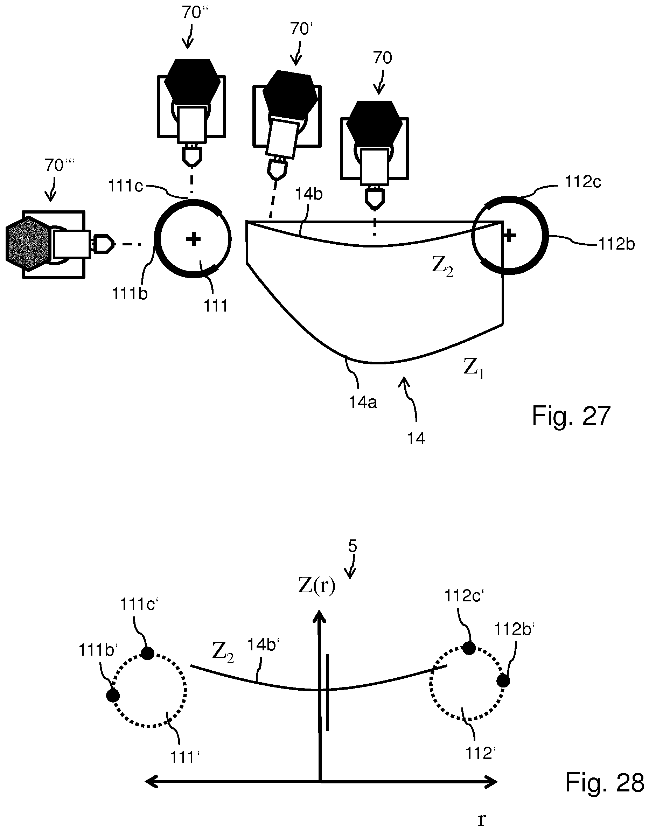

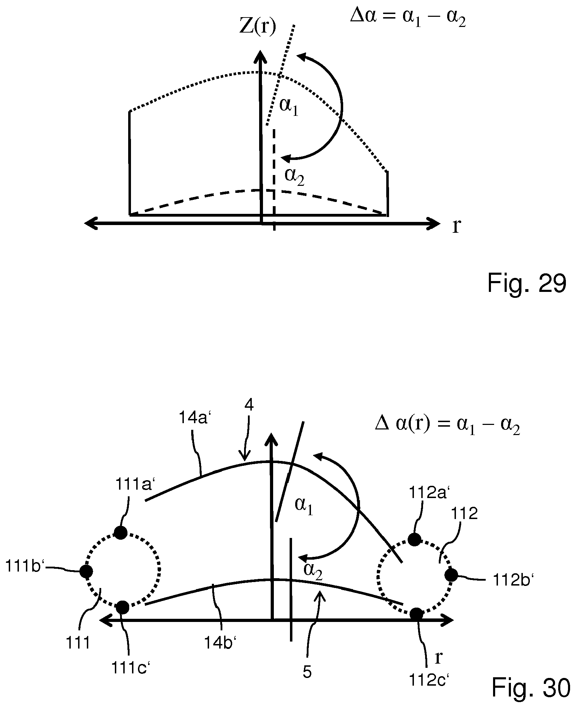

Anhand der jeweils zwei abgescannten Oberflächenabschnitte 111a, 111b bzw. 111b und 111c kann in jeden der beiden Oberflächenabbilder 4, 5 jeweils das Zentrum des betreffenden Referenzobjekts 111, 112, 113 rechnerisch bestimmt werden. Anhand jener Bestimmung des Zentrums der Referenzobjekte 111, 112, 113 können diese bei der rechnerischen Superposition der Abbilder 14a', 14b' der abgescannten Oberflächen 14a, 14b des Objekts 14 hinsichtlich sämtlicher Bewegungsfreiheitsgrade präzise überlagern und zueinander in Überdeckung gebracht werden. Eine derartige Referenzierung und Lagebestimmung der Referenzobjekte 111, 112, 113 ermöglicht nicht nur die Bestimmung der Dicke oder des Dickenprofils d(r) des Objekts 14, sondern ermöglicht ferner die Bestimmung einer Verkippung α1 oder einer Dezentrierung α2 der gegenüberliegenden Oberflächen 14a, 14b des Objekts. Komplizierte Objekte 14, wie beispielsweise asphärische oder bi-asphärische Linsen können auf diese Art und Weise präzise und effizient hinsichtlich ihrer geometrischen Ausgestaltung vermessen und charakterisiert werden. In den Figuren 28 und 30 sind die Abbilder 111a', 111b', 111c', 112a', 112b', 112c' der nacheinander abgescannten Oberflächenabschnitte lediglich zweier Referenzobjekte dargestellt. Für die tatsächliche rechnerische Überlagerung der Abbilder werden sämtliche abgescannten Oberflächenabbilder aller drei Referenzobjekte verwendet.

Die Anordnung der Referenzobjekte 111, 112, 113 am Außenrand 105 des Objekthalters 100 ist insoweit von Vorteil, als dass zumindest drei oder vier unterschiedliche Oberflächenabschnitte 111a, 111b, 111c der einzelnen Referenzobjekte 111, 112, 113 erfasst werden können. Die Referenzobjekte 111, 112, 113 sind insoweit von radial außen zugänglich. Es ist hierbei denkbar, dass für die Vermessung der Oberseite und dass für die Bestimmung des ersten Oberflächenabbilds 4 neben dem ersten Oberflächenabschnitt 111a der zweite Oberflächenabschnitt 111b von radial außen bestimmt wird. Jener zweite Oberflächenabschnitt 111b kann gleichermaßen auch bei der Vermessung des zweiten Oberflächenabbilds 5 verwendet werden. Mit anderen Worten können die in den Fig. 26 und 28 dargestellten Abbilder 111b' der Oberflächenabschnitte 111b zusammenfallen. Dies wird vor allem durch die selbstzentrierende Lagerung der Referenzobjekte 111, 112, 113 an den Nuten 114 der jeweiligen Lagerabschnitte 141, 142, 143 unterstützt und vereinfacht.

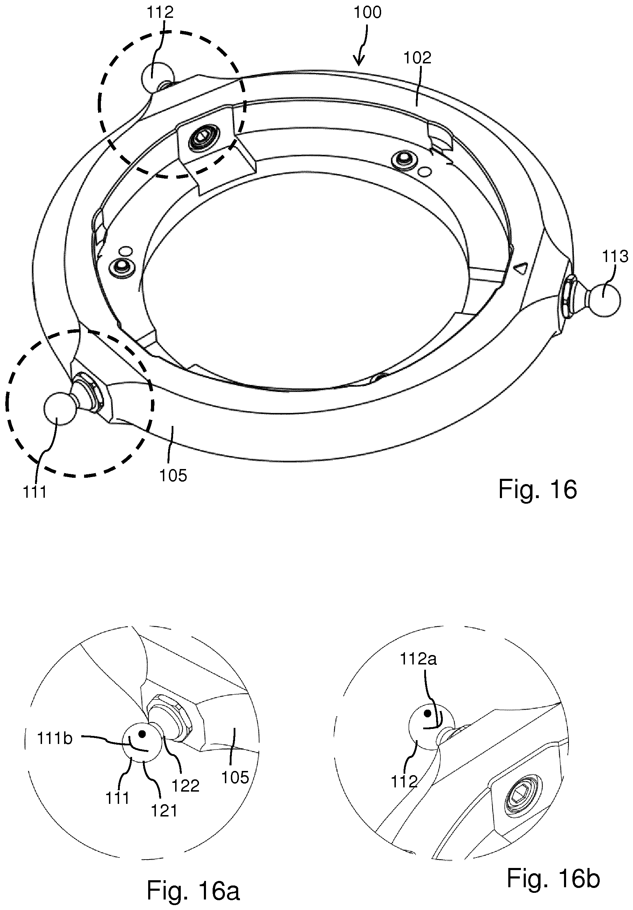

In den Fig. 14 und 15 ist ferner verdeutlicht, dass für das Abscannen oder Abtasten zweier unterschiedlicher Oberflächenabschnitte 111a, 111b die Abstandsmesseinrichtung 70 nicht zwangsläufig in die Ebene des Objekthalters 100 verbracht werden muss. Für die Bestimmung und Vermessung zweier unterschiedlicher Oberflächenabschnitte 111a, 111b kann es ausreichend sein, die Abstandsmesseinrichtung in eine erste Position 70" zu bringen, welche zwar oberhalb des Objekthalters 100, aber radial nach innen zum zu vermessenden Referenzobjekt 111 liegt. Die Abstandsmesseinrichtung 70 muss für diese Art der Vermessung eines ersten Oberflächenabschnitts 111a, wie in Fig. 16b anhand dem Referenzobjekt 112 gezeigt, ausgehend von der Lage 70' gemäß Fig. 19 nur geringfügig weiter nach außen positioniert und ausgehend von der Ausrichtung oder Orientierung gemäß der Position 70' nur geringfügig gedreht werden. Eine zweite Messung eines zweiten Oberflächenabschnitts 111b kann alsdann in der Position 70''' gemäß Fig. 14 erfolgen, in welcher sich die Abstandsmesseinrichtung 70 vertikal versetzt und oberhalb des Referenzobjekts 111 befindet. Fig. 16a zeigt schematisch das Abscannen eines Oberflächenabschnitts 111a in der Position 70''' gemäß Fig. 15. Fig. 16b zeigt das Abscannen eines Oberflächenabschnitts 112a des Referenzobjekts 112 in der Position 70" gemäß Fig. 14 oder gemäß Fig. 15.

Für das Abscannen zweier unterschiedlicher Oberflächenabschnitte 111a, 111b und für die Erzeugung des ersten und des zweiten Oberflächenabbilds 4, 5 ist es prinzipiell ausreichend, wenn das betreffende Referenzobjekt 111 aus zwei verschiedenen Richtungen abgescannt wird. Der Winkel γ zwischen den unterschiedlichen Messrichtungen sollte hierbei vorzugsweise größer als 15°, weiter vorzugsweise größer als 30°, weiter vorzugsweise größer als 45°, größer als 60° oder größer als 75° sein. Er kann auch 90° und mehr betragen. In Fig. 15 beträgt der Winkel γ annähernd 90°, in Fig. 14 beträgt der Winkel γ in etwa 45°. Vergleichsweise kleine Winkel zwischen den Abtast- oder Abscannrichtungen für die Erfassung zweier unterschiedlicher Oberflächenabschnitte 111a, 111b oder für Oberflächenabschnitte 111b, 111c sind vorrichtungstechnisch von besonderem Vorteil. Die Abstandsmesseinrichtung 70 kann nämlich nur mit endlicher, einer vergleichsweise geringen Geschwindigkeit bewegt und/oder die Abstandssensoren 34, 36 können nur mit einer vergleichsweise geringen Winkelgeschwindigkeit am Halter 26 gedreht werden.

Wie ferner in den Fig. 14 und 15 gezeigt, ist die Anordnung von Referenzkugeln 121 am Außenrand 105 des Objekthalters 100 über die durchmesserreduzierten Schaftabschnitte 122 auch dahingehend von Vorteil, als dass für das Abtasten oder Abscannen zweier unterschiedlicher Oberflächenabschnitte 111a, 111b die Abstandsmesseinrichtung, in Radialrichtung betrachtet, gar nicht oder nur geringfügig über den Außenrand 105 des Ringkörpers 102 hinaus bewegt werden muss. Die Abstandsmesseinrichtung 70 kann bezogen auf die Radialrichtung auch innerhalb des Ringkörpers 102 verbleiben.

Da die horizontale Verstellbarkeit der Abstandsmesseinrichtung vorrichtungsbedingt eingeschränkt und aus ökonomischen Gründen einen maximal vorgegebenen horizontalen Verstellweg nicht überschreiten kann, ermöglicht ein Erfassen oder Scannen eines radial nach innen gerichteten Oberflächenabschnitts 111a eines Referenzobjekts 111 eine effektive Vergrößerung des Durchmessers oder des Radius des Objekthalters 100. Ein von radial innen nach radial außen gerichtetes Abtasten oder Erfassen von zumindest einem Oberflächenabschnitt 111a, wie in den Fig. 14 und 15 angezeigt, ermöglicht bei unveränderter Bauform der Vorrichtung 10 die Vermessung von Objekten 14 mit einem größeren Durchmesser.

### Bezugszeichenliste

- 1: Orientierung
- 2: Orientierung
- 4: Oberflächenabbild
- 5: Oberflächenabbild
- 6: Symmetrieachse
- 7: Symmetrieachse
- 10: Vorrichtung
- 11: Basis
- 12: Objektträgereinrichtung
- 13: Lagerelement
- 14: Objekt
- 14a: Oberfläche
- 14b: Oberfläche
- 16: Drehachse
- 18: Referenzobjekt
- 20: Referenzobjekt
- 22: Referenzfläche
- 24: Referenzfläche
- 26: Halter
- 28: Referenzkörper
- 30: Referenzfläche
- 32: Lager
- 33: Drehachse
- 34: Abstandssensor
- 36: Abstandssensor
- 38: Abstand
- 40: Abstand
- 42: Messpunkt
- 44: Messpunkt
- 46: Abstand
- 48: Abstand
- 50: Sensor
- 52: Sensor
- 60: Steuerung
- 70: Abstandsmesseinrichtung
- 100: Objekthalter
- 102: Ringkörper
- 104: Oberseite
- 105: Außenrand
- 106: Unterseite
- 107: Markierung
- 108: Dreieck
- 109: Achse
- 110: Referenzstruktur
- 111: Referenzobjekt
- 111a, b, c: Oberflächenabschnitt
- 112: Referenzobjekt
- 112a, b, c: Oberflächenabschnitt
- 113: Referenzobjekt
- 113a, b, c: Oberflächenabschnitt
- 114: Flansch
- 115: Auflagepunkt
- 116: Objektträger
- 117: Durchgangsöffnung
- 118: Gegenbefestigungselement
- 119: Ausnehmung
- 120: Befestigungselement
- 120a: Kopf
- 120b: Schaft
- 121: Referenzkugel
- 122: Schaftabschnitt
- 123: Teilbereich
- 124: Aufnahmebereich
- 126: Innengewinde
- 127: Außengewinde
- 128: Flansch
- 130: Fixierring
- 140: Träger
- 141: Lagerabschnitt
- 142: Lagerabschnitt
- 143: Lagerabschnitt
- 144: Nut
- 145: Trägerkörper
- 146: Schenkel
- 146a: Endabschnitt
- 147: Endabschnitt
- 148: Schenkel
- 148a: Endabschnitt
- 149: Endabschnitt
- 150: Außenrand
- 151: Lagerkörper
- 152: Lagerkörper
- 153: Lagerkörper
- 154: Schaft
- 204: Gestell
- 205: Schenkel
- 206: Schenkel
- 208: Verbindungsbalken

## Patentansprüche

1. Objektträgereinrichtung für eine Vorrichtung zur geometrischen Vermessung eines Objekts (14), mit:
- einem Objekthalter (100), an welchem das zu vermessende Objekt (14) befestigbar ist, wobei der Objekthalter (100) eine Oberseite (104) und eine Unterseite (106) aufweist,
- einem Träger (140), welcher eine erste Lagerstelle (141), eine zweite Lagerstelle (142) und eine dritte Lagerstelle (143) aufweist, die voneinander beabstandet am Träger (140) angeordnet sind,
- einer Referenzstruktur (110), welche ein erstes Referenzobjekt (111), ein zweites Referenzobjekt (112) und ein drittes Referenzobjekt (113) aufweist, welche an den Ecken eines gedachten Dreiecks (108) am Objekthalter (100) angeordnet sind, wobei das erste Referenzobjekt (111) in einem ersten Abstand (D1) vom zweiten Referenzobjekt (112) angeordnet ist, wobei das zweite Referenzobjekt (112) in einem zweiten Abstand (D2) vom dritten Referenzobjekt (113) angeordnet ist und wobei das dritte Referenzobjekt (113) in einem dritten Abstand (D3) vom ersten Referenzobjekt (111) angeordnet ist und wobei sich der zweite Abstand (D2) vom ersten Abstand (D1) oder vom drittem Abstand (D3) unterscheidet.

2. Objektträgereinrichtung nach Anspruch 1, wobei der Objekthalter (100) mittels der Referenzobjekte (111, 112, 113) in einer ersten und in einer zweiten Ausrichtung (O, U) an den Lagerstellen (141, 142, 143) des Trägers (140) lagestabil positionierbar oder fixierbar ist, wobei der Objekthalter (100) ausgehend von der ersten Ausrichtung (O) durch eine Drehung um 180° bezüglich einer durch das erste Referenzobjekt (111) verlaufenden gedachten Drehachse (109) in die zweite Ausrichtung (U) überführbar ist.

3. Objektträgereinrichtung nach Anspruch 2, wobei in der ersten Ausrichtung (O) des Objekthalters (100) das erste Referenzobjekt (111) an der ersten Lagerstelle (141) anordenbar ist, das zweite Referenzobjekt (112) an der zweiten Lagerstelle (142) anordenbar ist und das dritte Referenzobjekt (113) an der dritten Lagerstelle (143) anordenbar ist.

4. Objektträgereinrichtung nach Anspruch 2 oder 3, wobei in der zweiten Ausrichtung (U) des Objekthalters (100) das erste Referenzobjekt (111) an der ersten Lagerstelle (141) anordenbar ist, das zweite Referenzobjekt (112) an der dritten Lagerstelle (143) anordenbar ist und das dritte Referenzobjekt (113) an der zweiten Lagerstelle (142) anordenbar ist.

5. Objektträgereinrichtung nach einem der vorhergehenden Ansprüche, wobei zumindest eines von erstem, zweitem und drittem Referenzobjekt (111, 112, 113) von einem Außenrand (105) des Objekthalters (100) hervorsteht.

6. Objektträgereinrichtung einem der vorhergehenden Anspruch 5, wobei zumindest eines der Referenzobjekte (111, 112, 113) über einen längserstreckten Schaftabschnitt (122) am Außenrand (105) des Objekthalters (100) befestigt ist.

7. Objektträgereinrichtung nach Anspruch 5, wobei der Schaftabschnitt (122) einen Schaftdurchmesser oder Schafftquerschnitt aufweist, welcher kleiner ist als ein entsprechender Durchmesser oder Querschnitt des Referenzobjekts (111, 112, 113).

8. Objektträgereinrichtung einem der vorhergehenden Ansprüche, wobei das erste, das zweite und das dritte Referenzobjekt (111, 112, 113) jeweils eine Referenzkugel (121) mit einer sphärischen Außenoberfläche aufweisen.

9. Objektträgereinrichtung nach einem der vorhergehenden Ansprüche, wobei zumindest eine von erster, zweiter und dritter Lagerstelle (141, 142, 143) eine in etwa V-förmige Nut (144) zur Aufnahme eines entsprechenden Referenzobjekts (111, 112, 113) aufweist.

10. Objektträgereinrichtung nach Anspruch 9, wobei die Nut (144) von zwei gegenüberliegenden und schräg zu einer Senkrechten verlaufenden Schenkeln (146, 148) gebildet ist, wobei voneinander abgewandte Endabschnitte (147, 149 der Schenkel (146, 148) horizontal abgeflacht verlaufen.

11. Objektträgereinrichtung nach einem der vorhergehenden Ansprüche, wobei der Träger (140) drehbar an einer Basis (11) einer Vorrichtung zur geometrischen Vermessung des Objekts (14) lagerbar ist.

12. Objektträgereinrichtung nach einem der vorhergehenden Ansprüche, wobei der Träger (140) einen ring- oder tellerförmigen Trägerkörper (145) mit einem Außenrand (150) aufweist, wobei an dem Außenrand (150) ein, den ersten Lagerabschnitt (141) aufweisender erster Lagerkörper (151), ein, den zweiten Lagerabschnitt (142) aufweisender zweiter Lagerkörper (152) und ein, den dritten Lagerabschnitt (143) aufweisender dritter Lagerkörper (153) angeordnet sind.

13. Vorrichtung zur geometrischen Vermessung eines Objekts (14), mit
- einer Basis (11) und mit einer daran angeordneten Objektträgereinrichtung (12) für das Objekt (14) nach einem der vorhergehenden Ansprüche,
- zumindest einem gegenüber der Basis (11) fixierbaren Referenzobjekt (18, 20) und mit
- zumindest einer Abstandsmesseinrichtung (70), mittels welcher ein Abstand zwischen dem Referenzobjekt (18, 20) und der dem Referenzobjekt (18, 20) zugewandten Oberfläche (14a, 14b) des Objekts (14) bestimmbar ist,
- wobei der Objekthalter (100) mittels seiner Referenzstruktur (110) wahlweise in einer ersten Ausrichtung (O) und in einer zweiten Ausrichtung (U) an der Objektträgereinrichtung (12) anordenbar ist,
- wobei die Abstandsmesseinrichtung (70) und der Objekthalter (100) zum Abscannen der Oberfläche (14a, 14b) des Objekts (14) und der Referenzstruktur (110) relativ zueinander beweglich sind.

14. Verfahren zur geometrischen Vermessung eines Objekts (14), mit den Schritten:
- Anordnen eines mit einem zu vermessenden Objekt (14) versehenen Objekthalters (100) in einer ersten Ausrichtung (O) an einem Träger (140) einer Objektträgereinrichtung (12),
- Abscannen einer ersten Oberfläche (14a) des Objekts (14) und Abscannen zumindest eines Oberflächenabschnitts (111a, 111b) eines ersten Referenzobjekts (111), eines zweiten Referenzobjekts (112) und eines dritten Referenzobjekts (113) einer Referenzstruktur (110) des Objekthalters (100) mittels einer Abstandsmesseinrichtung (70) und Erzeugung eines ersten Oberflächenabbilds (4),
- Anordnen des Objekthalters (100) in einer zweiten Ausrichtung (U) an der Objektträgereinrichtung (12),
- Abscannen einer zweiten Oberfläche (14b) des Objekts (14) und Abscannen zumindest eines weiteren Oberflächenabschnitts (111b, 111c) des ersten Referenzobjekts (111), des zweiten Referenzobjekts (112) und des dritten Referenzobjekts (113) mittels der Abstandsmesseinrichtung (70) zur Erzeugen eines zweiten Oberflächenabbilds (5),
- Zuordnen des ersten und des zweiten Oberflächenabbilds (4, 5) anhand der abgescannten Oberflächenabschnitte (111a, 111b, 111c) der Referenzobjekte (111, 112, 113).

15. Computerprogramm zur geometrischen Vermessung eines Objekts (14) mittels einer Vorrichtung nach Anspruch 14, mit:
- Programmmitteln zum Abscannen einer ersten Oberfläche (14a) des Objekts (14) und zumindest eines Oberflächenabschnitts (111a, 111b) eines ersten Referenzobjekts (111), eines zweiten Referenzobjekts (112) und eines dritten Referenzobjekts (113) einer Referenzstruktur (110) des Objekthalters (100), an welchem das Objekt (14) angeordnet ist,
- Programmmitteln zur Erzeugung eines ersten Oberflächenabbilds (4) auf Basis der abgescannten ersten Oberfläche (14a) des Objekts (14),
- Programmmitteln zum Abscannen einer zweiten Oberfläche (14b) des Objekts (14) und zumindest eines weiteren Oberflächenabschnitts (111b, 111c) des ersten Referenzobjekts (111), des zweiten Referenzobjekts (112) und des dritten Referenzobjekts (113),
- Programmmitteln zur Erzeugung eines zweiten Oberflächenabbilds (5) auf Basis der abgescannten zweiten Oberfläche (14b) des Objekts (14), und
- Programmmitteln zum Zuordnen des ersten und des zweiten Oberflächenabbilds (4, 5) anhand der abgescannten Oberflächenabschnitte (111a, 111b, 111c, 112a, 112b, 112c, 113a, 113b, 113c) der Referenzobjekte (111, 112, 113).
